# EUROPÄISCHE PATENTSCHRIFT

(11) **EP 1 647 579 B1**
(45) Veröffentlichungstag und Bekanntmachung des Hinweises auf die Patenterteilung: **26.12.2007**
(21) Anmeldenummer: 05021843.7
(22) Anmeldetag: 06.10.2005
(51) Int. Cl.: C08L 83/04

(54) **Siliconkautschuk-Zusammensetzung mit verbesserter Haltbarkeit**
Silicone rubber composition with prolonged potlife
Composition élastomère à base de silicone à temps de conservation en pot accru

(30) Priorität: 14.10.2004 DE 102004050128
(43) Veröffentlichungstag der Anmeldung: 19.04.2006
(73) Patentinhaber: Wacker Chemie AG, 81737 München (DE)
(72) Erfinder: Kuhn, Arvid, Dr., 84453 Mühldorf (DE); Guske, Werner, 84359 Simbach (DE); Dietl, Stefan, Dr., 84359 Simbach (DE)
(74) Vertreter: Renner, Thomas

(56) Entgegenhaltungen:
- EP-A- 0 787 772
- EP-A- 0 801 111
- EP-A- 0 928 008
- DE-A1- 19 740 631
- US-A- 5 721 300

## Beschreibung

Die Erfindung betrifft Siliconkautschuk-Zusammensetzungen für Hochspannungsisolatoren, die zu schwerbrennbaren Siliconkautschuken aushärten. Genauer betrifft die Erfindung additions- oder peroxidvernetzbare Siliconkautschukzusammensetzungen, die Aluminiumhydroxid als Füllstoff enthalten, wobei die unvernetzte Zusammensetzung eine gegenüber dem Stand der Technik verbesserte Lagerstabilität und verbesserte Verarbeitungseigenschaften aufweist. Diese verbesserten Eigenschaften werden dabei sowohl mit oberflächenbehandeltem wie mit unbehandeltem Aluminiumhydroxid erreicht.

Aluminiumhydroxid, auch bekannt als Aluminiumtrihydrat (ATH), ist ein stöchiometrisch definiertes, kristallines Aluminiumhydroxid, welches aus Niederschlägen durch Zugabe von Basen zu Aluminiumsalzlösungen oder aus Bauxit erhältlich ist, oder ein Aluminiumoxidhydrat, in der Technik häufig Tonerdehydrat genannt, das die Zusammensetzung Al₂O₃·H₂O oder Al₂O₃·3 H₂O aufweist und somit als Oxidhydrat angesehen und als amorpher Bestandteil von mineralischen Aluminiumvorkommen, wie beispielsweise Bauxit oder Alumogel, erhalten werden kann.

Siliconkautschuk-Zusammensetzungen, die Aluminiumhydroxidpulver enthalten, sind bereits bekannt. Es ist auch bekannt, dass solche Zusammensetzungen durch ein Härtungsmittel, gegebenenfalls in der Wärme, zu einem Siliconkautschuk aushärten. Härtungsmittel kann beispielsweise ein Peroxid oder die Kombination aus einem ein Übergangsmetall enthaltenden Hydrosilylierungskatalysator und einem Methylhydrogensiloxygruppen enthaltenden Organosiloxan sein. Dem Fachmann ist bekannt, dass sich durch Zusatz einer ausreichenden Menge Aluminiumhydroxidpulver zu Siliconkautschukzusammensetzungen einige Eigenschaften des vernetzten Kautschuks, die für die Verwendung beispielsweise als Hochspannungsisolator oder schwerbrennbare Kabelummantelung erforderlich sind, wie beispielsweise Lichtbogenbeständigkeit, Kriechstromfestigkeit und Schwerbrennbarkeit, erheblich verbessern lassen.

Dem Fachmann ist andererseits auch bekannt, dass die Verwendung von Aluminiumhydroxid als Füllstoff eine Reihe von erheblichen Nachteilen mit sich bringt. So verschlechtern sich beispielsweise die Verarbeitungseigenschaften der unvernetzten Zusammensetzung, wie Fellfestigkeit und Walzenklebrigkeit. Dadurch, dass Aluminiumhydroxidpulver kaum verstärkende Eigenschaften hat, werden die mechanischen Eigenschaften des vernetzten Kautschuks, wie Reißfestigkeit und Reißdehnung schlechter.

Auch die Lagerstabilität der unvernetzten Zusammensetzung wird schlechter. Die Lagerstabilität ist die Zeit, die eine Zusammensetzung bei bestimmten Bedingungen, beispielsweise bei einer bestimmten Temperatur, gelagert werden kann, ohne dass sie unerwünscht vorzeitig ganz oder teilweise vernetzt oder, umgekehrt, ohne dass sie nach dieser Zeit nicht mehr vernetzbar ist, beispielsweise weil für die Vernetzung notwendige Komponenten sich zersetzt haben.

Dem Fachmann sind sowohl Siliconkautschukzusammensetzungen bekannt, die unbehandeltes Aluminiumhydroxid enthalten, wie auch Siliconkautschukzusammensetzungen, die Aluminiumhydroxid enthalten, dessen Oberfläche beispielsweise mit einem Silan, Silazan oder Siloxan behandelt wurde, mit dem Ziel, verschiedene Eigenschaften der Zusammensetzung oder des Kautschuks, wie beispielsweise Verarbeitbarkeit und Haltbarkeit der unvernetzten Zusammensetzung, dielektrische und auch mechanische Eigenschaften des vernetzten Kautschuks, zu verbessern.

Die Verwendung von oberflächenbehandeltem Aluminiumhydroxid wurde bereits in den 1970er Jahren erwähnt. In der Patentschrift US 4,217,466 werden Isolatoren, deren Schirme aus einem Siliconelastomer bestehen, das oberflächenbehandeltes Aluminiumhydroxid als Füllstoff enthält, beschrieben. Behandlungsreagenz ist beispielsweise ein Vinylsilan.

Die Patentschrift US 5,691,407 offenbart additionsvernetzende Siliconkautschukzusammensetzungen, die oberflächenbehandeltes Aluminiumhydroxid enthalten. Das Reagenz zur Oberflächenbehandlung kann ein Silan oder Silazan, eine Titanverbindung oder ein Polysiloxan sein. Die Verwendung von oberflächenbehandeltem Aluminiumhydroxid führt zu verbesserten elektrischen Eigenschaften des Siliconkautschuks bei der Verwendung in Hochspannungsisolatoren. Die Verwendung von zuvor oberflächenbehandeltem Aluminiumhydroxid ist bevorzugt, es kann aber auch unbehandeltes Aluminiumhydroxid in Kombination mit Hexamethyldisilazan eingesetzt werden.

Das europäische Patent EP 0 787 772 B1 beschreibt härtbare Siliconkautschukzusammensetzungen, die Aluminiumhydroxid enthalten, aber keine weiteren verstärkenden Füllstoffe und trotzdem gute mechanische Festigkeit und ausgezeichnete elektrische Eigenschaften aufweisen. Härtungsmittel ist ein Peroxid. Die guten mechanischen Eigenschaften werden im wesentlichen dadurch erreicht, dass das Aluminiumhydroxidpulver mit einem Silan oder Siloxan, das Alkenylgruppen und Alkoxy- oder Hydroxygruppen aufweist, beispielsweise Vinyltrimethoxysilan oder vinylhaltige Organosiloxane mit SiOH oder Si-OR Endgruppen, behandelt wird. Das Aluminiumhydroxidpulver kann dabei mit dem Reagenz vorbehandelt sein oder die Behandlung kann in situ bei der Herstellung der Siliconkautschukzusammensetzung erfolgen. Vergleichsbeispiele, in denen unbehandeltes Aluminiumhydroxid als Füllstoff verwendet wird, zeigen deutlich schlechtere Reißfestigkeiten und Weiterreißwiderstände. Ein Kautschuk, der 150 Teile Aluminiumhydroxidpulver, bezogen auf 100 Teile Polydiorganosiloxan, enthält, hat eine Reißfestigkeit von 5.1 MPa und einen Weiterreißwiderstand von 13 N/mm, wenn das Aluminiumhydroxid behandelt wurde, und eine Reißfestigkeit von nur 1.7 MPa und einen Weiterreißwiderstand von 8 N/mm mit unbehandeltem Aluminiumhydroxid.

Das europäische Patent EP 0 808 868 B2 Dow offenbart härtbare Siliconkautschukzusammensetzungen, die mit einem Organosilan oder Organosilazan oberflächenbehandeltes Aluminiumhydroxidpulver enthalten. Das Silan bzw. Silazan kann dabei auch Alkenylgruppen enthalten, wie beispielsweise Vinyltrimethoxysilan oder Tetramethyl-divinyl-disilazan. Das Härtungsmittel kann dabei beispielsweise ein Peroxid sein oder eine Kombination aus einem Hydrosilylierungskatalysator und einem Si-H Gruppen enthaltenden Polyorganosiloxan. Die Patentschrift beschreibt, dass Siliconkautschukzusammensetzungen, die herkömmliches ATH enthalten, nicht stabil sind, weil das Aluminiumhydroxid Wasser absorbiert und sich dadurch die elektrischen Eigenschaften verschlechtern. Die Behandlung des Aluminiumhydroxidpulvers mit einem Organosilan oder Organosilazan wird als essentiell beschrieben, um gute Wasserbeständigkeit und gute elektrische Eigenschaften zu erzielen.

Die europäische Patentschrift EP 0 808 875 B1 beschreibt Siliconkautschukzusammensetzungen, die Aluminiumhydroxid und Platinverbindungen enthalten können um gute Flammfestigkeit zu erzielen, wobei diese Zusammensetzungen vor dem Aushärten noch ausreichende Fließfähigkeit aufweisen sollen, um gut verarbeitbar zu sein. Diese Zusammensetzungen enthalten Polyorganosiloxan mit einer Viskosität zwischen 100 und 100.000 mPa•s, pyrogene Kieselsäure, oberflächenbehandeltes Zinkcarbonat, ein Si-H Gruppen enthaltendes Polyorganosiloxan und einen Platinkatalysator. Aluminiumhydroxid und eine weitere Platinverbindung sind optionale Bestandteile der Zusammensetzung. Wird Aluminiumhydroxid verwendet, so ist es oberflächenbehandelt. Die Oberflächenbehandlung des Zinkcarbonats und des Aluminiumhydroxids ist dabei entscheidend für das Erreichen des Ziels der Erfindung. Da diese Zusammensetzungen auch bei Raumtemperatur langsam vernetzen, kann zur Verlängerung der Verarbeitungszeit ein Inhibitor zugegeben werden, wie beispielsweise Ethinylcyclohexanol oder Triphenylphosphan.

Das Patent US 5,668,205 offenbart additionsvernetzende Siliconkautschukzusammensetzungen, die Aluminiumhydroxid enthalten und zusätzlich zur Verbesserung der elektrischen Eigenschaften ein trimethylsilyl-endständiges Dimethylpolysiloxan. Ebenfalls beschrieben werden peroxidische Siliconkautschukzusammensetzungen mit Aluminiumhydroxid, wobei ein Großteil der Organopolysiloxane Trivinyl- oder Divinylsilylendgruppen trägt, und gegebenenfalls einem Polysiloxan ohne ungesättigte Gruppen. Solche Zusammensetzungen können im Spritzguss verarbeitet werden und härten zu Siliconkautschuken aus, die verbesserte elektrische Eigenschaften aufweisen, insbesondere wenn ein aus der Zusammensetzung hergestellter Isolator in einer Umgebung mit hoher Luftverschmutzung eingesetzt wird. Das Aluminiumhydroxid kann unbehandelt oder oberflächenbehandelt sein. Derartige Polymere mit Di- bzw. Trivinylendgruppen sind in der Siliconchemie keine gängigen Einsatzstoffe. Ihre Herstellung ist teuer und aufwendig und ihr Einsatz damit nicht wünschenswert.

Wie ebenfalls in der Patentschrift US 5,977,216 beschrieben, werden in US 5,668,205 additionsvernetzende Zusammensetzungen offenbart, die mit Ethinylcyclohexanol stabilisiert sind. Die Haltbarkeit dieser Zusammensetzungen ist nicht angegeben. Dem Fachmann ist aber ersichtlich, dass eine Lagerung über Monate zur langsamen Vernetzung der Zusammensetzung führen wird, wenn nicht eine so große Menge Ethinylcyclohexanol verwendet wird, dass sich die Vernetzungscharakteristik bei der Verarbeitung verschlechtert.

Das Patent US 5,977,216 beschreibt, dass Aluminiumhydroxid selbst keine verstärkenden Eigenschaften hat. Weil aber, um die gewünschten elektrischen Eigenschaften zu erhalten, sehr hohe Füllgrade an Aluminiumhydroxid in den Siliconkautschukzusammensetzungen notwendig sind, resultieren daraus Siliconkautschuke mit geringer mechanischer Festigkeit. Beschrieben werden hier härtbare Siliconkautschukzusammensetzungen, die Aluminiumhydroxid enthalten, das mit Vinylsilazanen, wie beispielsweise Tetramethyldivinyldisilazan, oder Vinylalkoxysilanen, wie beispielsweise Vinyltrimethoxysilan, derart behandelt ist, dass auf der Oberfläche 1 x 10⁻⁶ bis 2 x 10⁻⁴ mol Vinylgruppen pro Gramm Aluminiumhydroxid vorhanden sind. Das derartig mit Vinylgruppen modifizierte Aluminiumhydroxid hat dann verstärkende Eigenschaften, so dass trotz der hohen Füllgrade die Festigkeit des Kautschuks nicht leidet. Die Reißfestigkeit der Kautschuke mit oberflächenbehandeltem Aluminiumhydroxid liegt in den erfindungsgemäßen Ausführungen zwischen 45 und 58 kgf/cm² (entsprechend 4.41 - 5.69 N/mm²), in den Ausführungen mit unbehandeltem Aluminiumhydroxid zwischen 18 und 25 kgf/cm² (1.76 - 2.45 N/mm²).

In den Beispielen werden gebrauchsfertige additionsvernetzende Zusammensetzungen beschrieben, die einen Hydrosilylierungskatalysator enthalten und ein Organopolysiloxan, das Si-H Gruppen enthält. Um eine direkte Vernetzung der Zusammensetzung zu verhindern, ist außerdem Ethinylcyclohexanol als Inhibitor enthalten. Dem Fachmann ist dabei klar, dass durch Zusatz von Ethinylcyclohexanol zwar die Topfzeit der gebrauchsfertigen Zusammensetzung auf einige Tage erhöht werden kann. Eine Lagerung über mehrere Monate ist jedoch nicht möglich, da dazu eine so große Menge an Inhibitor nötig wäre, dass sich die Vernetzungscharakteristik bei der Verarbeitung verschlechtern würde.

In der europäischen Offenlegungsschrift EP 0 928 008 A2 werden Siliconkautschukzusammensetzungen für Hochspannungsisolatoren beschrieben, bei denen das Aluminiumhydroxid in situ oberflächenbehandelt wird. Bei der Herstellung der Zusammensetzungen wird unbehandeltes Aluminiumhydroxid in Kombination mit einem Organosilanhaftvermittler eingesetzt. Dadurch wird die Oberfläche des Aluminiumhydroxids hydrophobiert, wodurch die Wechselwirkung des Aluminiumhydroxids mit dem Polysiloxan verbessert wird und damit auch die Dispergierbarkeit und verstärkende Wirkung des Aluminiumhydroxids.

Die Patentschrift US 6,106,954 offenbart additionsvernetzende Organopolysiloxanzusammensetzungen, die oberflächenbehandeltes Aluminiumhydroxid enthalten, wobei das Behandlungsreagenz ein Organosilan oder Organosilazan ist oder auch ein Teilhydrolysat dieser Reagenzien, das frei ist von ungesättigten Gruppen. Aluminiumhydroxid wird zur Verbesserung der isolierenden Eigenschaften im Siliconkautschuk verwendet. Da Aluminiumhydroxid an sich aber hygroskopisch ist, verliert der Siliconkautschuk in feuchter Umgebung die isolierenden Eigenschaften. Durch die Verwendung von Aluminiumhydroxid, das wie oben beschrieben oberflächenbehandelt ist, behält der Siliconkautschuk seine isolierenden Eigenschaften auch unter feuchten Bedingungen bei.

Das europäische Patent EP 1 037 946 B1 beschreibt additionsvernetzende Siliconkautschukzusammensetzungen, die Aluminiumhydroxid und als weiteres Metalloxid Zinkoxid und gegebenenfalls Titandioxid enthalten. Mit dieser Zusammensetzung werden Nachteile des in der Anmeldung beschriebenen Standes der Technik wie geringe Lagerstabilität und zu geringe Kriechstromfestigkeit überwunden. Das Aluminiumhydroxid wird im Ausführungsbeispiel in situ durch ein Organosilazan oberflächenbehandelt. Obwohl die geringe Lagerstabilität von additionsvernetzenden mit Aluminiumhydroxid gefüllten Siliconkautschukzusammensetzungen im Stand der Technik als einer der Nachteile beschrieben wird, die mit dieser Anmeldung überwunden werden sollen, wird die Zusammensetzung trotzdem als zweikomponentiges System hergestellt, wobei in einer Komponente ein Platinkatalysator enthalten ist, in der anderen Komponente ein Polyorganosiloxanvernetzer mit Methylhydrogeneinheiten und ein Inhibitor. Die durch Vermischen der beiden Komponenten hergestellte gebrauchsfertige Masse wird direkt verarbeitet.

Der Zusatz von organischen Aminen oder deren Salzen oder ähnlichen Verbindungen zu Siliconkautschukzusammensetzungen wurde schon früh beschrieben. Im Patent US 3,268,473 werden beispielsweise Ammoniumcarbonat oder Ammoniumbicarbonat in Kombination mit Organosiliciumverbindungen, die Hydroxylgruppen enthalten, zugegeben, um das Verstrammungsverhalten ("creep hardening") zu verbessern. Die Patentschrift US 3,334,062 beschreibt den Zusatz von Ammoniumhydroxid, Ammoniumcarbonat oder Ammoniumcarboxylaten zu einer Mischung aus feinverteiltem anorganischem Füllstoff, vorzugsweise Kieselsäure, und cyclischen Organosiloxanen und Erwärmen der Mischung auf bis zu 170°C. Bei dem beanspruchten Prozess handelt es sich um Oberflächenbehandlungen von Füllstoffen (Hydrophobierung), wobei, aufgrund der durch die Ringspannung vorhandenen erhöhten Reaktivität, ausschließlich Cyclotrisiloxane verwendet werden.

Die deutsche Offenlegungsschrift DE 196 14 343 A1 beschreibt weiterhin Polyorganosiloxankautschukmassen, die in der Wärme zu Elastomeren aushärten, welche 0.01 bis 1 Gewichtsteil Ammonium-, Alkali- oder Erdalkalicarbaminat (Carbamat), bezogen auf 100 Gewichtsteile eines Polyorganosiloxans enthalten. Das Carbaminat wird dabei zur Verbesserung der Fellfestigkeit zugesetzt. Als Füllstoffe können nicht-verstärkende Füllstoffe, also Füllstoffe mit spezifischen Oberflächen (BET) von bis zu 50 m²/g wie beispielsweise Quarz, Calciumsilikat, Metalloxidpulver und verstärkende Füllstoffe, also solche mit Oberflächen (BET) von mehr als 50 m²/g, wie Kieselsäure oder Ruß enthalten sein. Bei der Herstellung werden die Bestandteile vermischt und einer Wärmebehandlung unterworfen.

Die Notwendigkeit zur Stabilisierung von gebrauchsfertigen Zusammensetzungen ist beispielsweise in der europäischen Patentschrift EP 1 077 226 B1 dargestellt. Bei additionsvernetzenden Siliconmassen beginnt die Vernetzung in Gegenwart eines Katalysators in dem Moment, in dem alle notwendigen Bestandteile in einer Komponente zusammen vorliegen (gebrauchsfertige Zusammensetzung). Die Vernetzungsgeschwindigkeit der Zusammensetzung muss dann durch geeignete Additive (Inhibitoren) so eingestellt werden, dass eine für die Anwendung ausreichende Topfzeit resultiert. Einkomponentige (gebrauchsfertige) und gleichzeitig lagerstabile Zusammensetzungen bieten in der Logistik Vorteile, da sie nicht erst kurz vor der Verarbeitung fertig gestellt werden müssen. Im europäischen Patent EP 1 077 226 B1 wird diese Aufgabe durch Verwendung spezieller Platinkatalysatoren gelöst, durch die die Topfzeit gegenüber üblichen Katalysatoren erheblich verlängert wird. Doch auch hier ist die Topfzeit begrenzt.

Der Stand der Technik beschreibt also eine Reihe von Vorteilen in Hinsicht auf Schwerbrennbarkeit und elektrische Eigenschaften bei der Verwendung von Aluminiumhydroxid als Füllstoff in Siliconkautschuken, aber auch die Nachteile, die Aluminiumhydroxid mit sich bringt in Hinblick auf Verarbeitungseigenschaften und Lagerstabilität des unvernetzten Kautschuks und mechanischen Eigenschaften des Vulkanisats. Der Stand der Technik versucht diese negativen Eigenschaften im Wesentlichen durch Verwendung von oberflächenbehandeltem Aluminiumhydroxid auszugleichen. Ein erheblicher Nachteil solcher Zusammensetzungen mit oberflächenbehandeltem Aluminiumhydroxid ist jedoch, dass die Oberflächenbehandlung des Aluminiumhydroxidpulvers ein zusätzlicher aufwendiger, und damit teurer Arbeitsschritt ist. Die Oberflächenbehandlung des Aluminiumhydroxidpulvers erfolgt gängigerweise durch Vorbehandlung oder in situ-Behandlung mit Behandlungsmitteln wie beispielsweise Silanen, die als gesundheitsschädlich oder toxisch eingestuft sind oder bei der Verarbeitung toxische Substanzen abspalten können. Damit sind entsprechende Sicherheitsmaßnahmen notwendig.

Dementsprechend ist es von Vorteil, wenn man einerseits eine Siliconkautschukzusammensetzung mit unbehandeltem Aluminiumhydroxid herstellen kann, die die gleichen guten Eigenschaften aufweist, wie die im Stand der Technik beschriebenen Zusammensetzungen mit oberflächen-behandeltem Aluminiumhydroxid, andererseits auch bei Verwendung von oberflächenbehandeltem Aluminiumhydroxid Eigenschaften wie Verarbeitbarkeit und Lagerstabilität verbessern kann.

Überraschenderweise wurde nun gefunden, dass durch Zusatz geeigneter Additive bei der Herstellung von mit Aluminiumhydroxid gefüllten Siliconkautschukzusammensetzungen sowohl die Fellfestigkeit wie auch die Lagerstabilität und Verarbeitbarkeit der unvernetzten Zusammensetzung deutlich verbessert wird. Diese Verbesserung der Eigenschaften wird bei Verwendung von oberflächenbehandeltem und auch von unbehandeltem Aluminiumhydroxid erreicht. Insbesondere die Verbesserung der Eigenschaften bei Verwendung von unbehandeltem Aluminiumhydroxid ist wünschenswert, da der Stand der Technik hier eine Reihe von erheblichen Nachteilen gegenüber oberflächen-behandeltem Aluminiumhydroxid beschreibt, die durch diese Erfindung ausgeglichen werden können. Das gilt nicht nur für die Eigenschaften der unvernetzten Zusammensetzung sondern ebenso für die mechanischen Eigenschaften am vernetzten Kautschuk.

Gegenstand der Erfindung sind Siliconkautschukzusammensetzungen für Hochspannungsisolatoren, enthaltend
(A) 100 Gewichtsteile von mindestens einem Diorganopolysiloxan mit der allgemeinen Formel (1)

   R¹ₐR²_{b}SiO_{(4-a-b)/2} (1)

   wobei
   - R¹: ein unsubstituierter oder halogensubstituierter einwertiger Kohlenwasserstoffrest mit 1 bis 20 Kohlenstoffatomen ist, der frei ist von aliphatisch ungesättigten Gruppen,
   - R²: ein unsubstituierter oder halogensubstituierter einwertiger Kohlenwasserstoffrest ist, der zumindest eine aliphatisch Kohlenstoff-Kohlenstoff-Mehrfachbindung enthält, wobei jedes Molekül im Durchschnitt mindestens zwei solche an Siliciumatome gebundenen einwertige Kohlenwasserstoffreste enthaltend aliphatisch Kohlenstoff-Kohlenstoff-Mehrfachbindungen aufweist und
   - a, b: unabhängig voneinander positive Zahlen, mit der Maßgabe, dass 1 ≤ a < 3, 0 < b ≤ 1 und 1 < a + b ≤ 3 ist,
(B) 1 bis 100 Gewichtsteile, bezogen auf 100 Gewichtsteile (A), hochdisperse Kieselsäure mit einer spezifischen Oberfläche, gemessen mit der BET Methode, von 50 - 300 m²/g,
(C) 50 - 300 Gewichtsteile, bezogen auf 100 Gewichtsteile (A) mindestens eines Aluminiumhydroxidpulvers mit einer spezifischen Oberfläche, gemessen nach der BET Methode, von 0.1 - 20 m²/g und einer durchschnittlichen Partikelgröße von 0.05 - 20 µm,
(D) Vernetzungsmittel in einer Menge, die ausreicht, um die Zusammensetzung zu härten, wobei dieses Vernetzungsmittel ausgewählt wird aus der Gruppe enthaltend
   (D1) ein organisches Peroxid, Hydroperoxid oder eine Mischung aus verschiedenen organischen Peroxiden oder Hydroperoxiden
   (D2) eine Kombination aus einem Organohydrogenpolysiloxan mit der allgemeinen Formel (2)

      R_{c}³H_{d}SiO_{(4-c-d)/2} (2)

      wobei
      - R³: ein substituierter oder unsubstituierter einwertiger Kohlenwasserstoffrest ist, der nicht aliphatisch ungesättigt ist, jedes Molekül im Durchschnitt zumindest drei solche an Siliciumatome gebundene Wasserstoffatome aufweist,
      - c,: d unabhängig voneinander positive Zahlen, mit der Maßgabe, dass 1 ≤ c < 3, 0 < d ≤ 1 und 1 < c + d ≤ 3 ist,
      und
      einem zumindest ein Übergangsmetall enthaltenden Hydrosilylierungskatalysator,
(E) 0.01 - 10.0 Gewichtsteile, bezogen auf 100 Gewichtsteile (A) einer anorganischen, organischen oder siliciumorganischen Base oder organischen oder siliciumorganischen Säure oder einer Verbindung, die bei Erwärmung eine anorganische, organische oder siliciumorganische Base oder organische oder siliciumorganische Säure freisetzt.

Der Bestandteil (A) der erfindungsgemäßen Siliconkautschukzusammensetzung ist ein Diorganopolysiloxan oder eine Mischung von Diorganopolysiloxanen der allgemeinen Formel (1):

Rₐ¹R_{b}²SiO_{(4-a-b)/2}. (1)

R¹ ist ein substituierter oder unsubstituierter einwertiger Kohlenwasserstoffrest, der keine aliphatisch ungesättigten Gruppen enthält. R² ist ein substituierter oder unsubstituierter einwertiger Kohlenwasserstoffrest, der aliphatisch ungesättigt ist, wobei jedes Molekül im Durchschnitt mindestens zwei solche an Siliciumatome gebundene ungesättigte Gruppen aufweist. Die Indizes a und b sind positive Zahlen in dem Bereich 1 ≤ a < 3, 0 < b ≤ 1 und 1 < a + b ≤ 3.

Insbesondere bedeutet R¹ einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen.

Beispiele für Reste R¹ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für substituierte Reste R¹ sind Halogenalkylreste, wie der 3,3,3-Trifluor-n-propylrest, der 2,2,2,2',2',2'-Hexafluor-isopropylrest, der Heptafluorisopropylrest und Halogenarylreste, wie der o-, m- und p-Chlorphenylrest, sowie alle für R oben genannten Reste, die vorzugsweise mit Mercaptogruppen, epoxyfunktionellen Gruppen, Carboxygruppen, Ketogruppen, Enamingruppen, Aminogruppen, Aminoethylaminogruppen, iso-Cyanatogruppen, Aryloxygruppen, Acryloxygruppen, Methacryloxygruppen, Hydroxygruppen und

Halogengruppen substituiert sein können.

Bevorzugt handelt es sich bei dem Rest R¹ um einen einwertigen Kohlenwasserstoffrest mit 1 bis 6 Kohlenstoffatomen, wobei der Methylrest besonders bevorzugt ist.

R² bedeutet insbesondere einen einwertigen, SiC-gebundenen Kohlenwasserstoffrest mit aliphatischer Kohlenstoff-Kohlenstoff-Mehrfachbindung.

Beispiele für Reste R² sind Alkenylreste, wie der Vinyl-, 5-Hexenyl-, Cyclohexenyl-, 1-Propenyl-, Allyl-, 3-Butenyl- und 4-Pentenylrest, und Alkinylreste, wie der Ethinyl-, Propargyl- und 1-Propinylrest.

Bevorzugt handelt es sich bei dem Rest R² um Alkenylreste, wobei der Vinylrest besonders bevorzugt ist.

In einer bevorzugten Ausführungsform ist R¹ eine Methylgruppe und R² eine Vinylgruppe. Die Struktur der Diorganopolysiloxane (A) kann linear oder verzweigt sein, wobei eine lineare Struktur bevorzugt ist. Die Viskosität der Diorganopolysiloxane (A) bei 25°C (bestimmt nach DIN 53018) liegt zwischen 1.000 mPa·s und 50.000.000 mPa·s. In einer bevorzugten Ausführungsform liegt die Viskosität der Diorganopolysiloxane (A) zwischen 500.000 und 40.000.000 mPa·s, noch bevorzugter zwischen 2.000.000 und 30.000.000 mPa·s und damit im Bereich der üblicherweise in hochtemperatur-vernetzenden Kautschuken (HTV) verwendeten Polysiloxane.

In einer anderen Ausführungsform liegt die Viskosität der Diorganopolysiloxane (A) bei 25°C (bestimmt nach DIN 53018) bevorzugt zwischen 1.000 mPa·s und 100.000 mPa·s, noch bevorzugter zwischen 5.000 und 50.000 mPa·s. Polysiloxane in diesem Viskositätsbereich werden üblicherweise für Flüssigsiliconkautschuke (liquid silicone rubber, LSR) verwendet.

Die Diorganopolysiloxane (A) können beispielsweise vinyl-terminierte Polydimethylsiloxane, vinyl-terminierte Polydimethyl-polymethylvinyl-siloxane oder trimethylsilylterminierte Polydimethyl-polymethylvinyl-siloxane sein. Die Komponente (A) kann aus einem einzigen Diorganopolysiloxan bestehen oder aus Mischungen von zwei oder mehr Diorganopolysiloxanen.

Die Komponente (B) ist hochdisperse Kieselsäure. Die Komponente (B) wird als verstärkender Füllstoff eingesetzt, der dem vernetzten Siliconkautschuk ausreichende mechanische Festigkeit verleiht.

Beispiele für verstärkende Füllstoffe, also Füllstoffe mit einer BET-Oberfläche von mindestens 50 m²/g, sind pyrogen hergestellte Kieselsäure, gefällte Kieselsäure oder Silicium-Aluminium-Mischoxide mit einer BET-Oberfläche von mehr als 50 m²/g. Die genannten Füllstoffe können hydrophobiert sein, beispielsweise durch Behandlung mit Organosilanen, -silazanen oder -siloxanen oder durch Veretherung von Hydroxylgruppen zu Alkoxygruppen. Bevorzugt sind pyrogen hergestellte Kieselsäuren mit einer BET-Oberfläche von mindestens 100 m²/g.

Die erfindungsgemäßen Massen enthalten verstärkende Füllstoffe in Mengen von vorzugsweise 1 bis 100 Gewichtteile, bevorzugt 3 bis 50 Gewichtteile bezogen auf 100 Gewichtsteile der Komponente (A). Bei einer Menge von unter einem Gewichtsteil ist die mechanische Festigkeit des vernetzten Kautschuks unzureichend, bei mehr als 100 Gewichtsteilen wird der Kautschuk spröde.

Es kann eine Art von Füllstoff, es kann aber auch ein Gemisch von mindestens zwei Füllstoffen eingesetzt werden.

Die Oberflächenbehandlung der Kieselsäure kann mit Siliciumverbindungen erfolgen, die gesättigte oder ungesättigte Gruppen enthalten oder mit Mischungen solcher Siliciumverbindungen. Bei der Verwendung von ungesättigte Gruppen enthaltenden Siliciumverbindungen weist die behandelte Kieselsäure entsprechende ungesättigte Gruppen an der Oberfläche auf. Unbehandelte Kieselsäure kann bei der Herstellung der Siliconkautschukzusammensetzungen in Kombination mit derartigen Siliciumverbindungen oder hydroxy-terminierten Diorganosiloxan-Oligomeren verwendet werden. Die Diorganosiloxan-Oligomere können wiederum ungesättigte Gruppen enthalten.

Beispiele für hydroxy-terminierte Diorganosiloxan-Oligomere sind Dimethylhydroxysiloxy-terminierte Dimethylsiloxan Oligomere, Dimethylhydroxysiloxy-terminierte Dimethylsiloxan-Methylvinylsiloxan Copolymer-Oligomere oder Hydroxy-terminierte Methylvinylsiloxan Oligomere.

Bei den ungesättigte Gruppen enthaltenden Siloxan-Oligomeren liegt der Anteil an solche ungesättigte Gruppen tragenden Siloxyeinheiten bevorzugt zwischen 1 und 50 mol-%, besonders bevorzugt zwischen 4 und 20 mol-%. Die Viskosität der Oligomere liegt bevorzugt zwischen 5 und 500 mPa·s, besonders bevorzugt zwischen 15 und 60 mPa·s. Bei der Oberflächenbehandlung der Kieselsäure werden die Behandlungsreagenzien bevorzugt so gewählt, dass zumindest ein Teil der verwendeten Siliciumverbindungen oder Siloxanoligomere ungesättigte Gruppen enthalten. Bevorzugt ist ein Anteil an ungesättigte Gruppen tragenden Behandlungsreagenzien von mindestens 10 Gew.-%, besonders bevorzugt mindestens 30 Gew.-%. Ist die Oberfläche der Kieselsäure mindestens teilweise mit ungesättigten Gruppen modifiziert, so verbessern sich die mechanischen Eigenschaften der vernetzten Siliconkautschukzusammensetzungen auch bei Verwendung von unbehandeltem Aluminiumhydroxidpulver.

Die Komponente (C) der erfindungsgemäßen Zusammensetzung ist entscheidend, um dem vernetzten Kautschuk die für die Verwendung als Isolator notwendigen elektrischen Eigenschaften, wie Lichtbogenbeständigkeit und Kriechstromfestigkeit zu verleihen. Die Komponente (C) ist Aluminiumhydroxidpulver, auch bekannt unter dem Namen Aluminiumtrihydrat (ATH) und wird üblicherweise durch die allgemeinen Formeln (3) oder (4) beschrieben:

Al(OH)₃ (3)

Al₂O₃ · 3 H₂O (4)

Das Aluminiumhydroxid kann dabei auch Mischoxide wie Aluminiumoxidhydrat AlO(OH) enthalten. Üblicherweise wird in Siliconkautschukzusammensetzungen Aluminiumhydroxid verwendet, das beispielsweise mit Silanen oder Silazanen, oberflächenbehandelt ist. Die erfindungsgemäßen Zusammensetzung kann sowohl Aluminiumhydroxid enthalten, das derartig oberflächenbehandelt ist, wie auch Aluminiumhydroxid, das nicht oberflächenbehandelt wurde. Oberflächen-behandeltes Aluminiumhydroxid ist beispielsweise erhältlich unter den Handelsnamen Hymod® 632 SP (J. M. Huber Corporation, Edison NJ/U.S.A.), Martinal® OL 104/A, OL 104/C oder OL 104/S (beide Martinswerk GmbH, Bergheim/Deutschland) oder Trefil 744 (Quarzwerke GmbH, Frechen/Deutschland).

Unbehandeltes Aluminiumhydroxid ist beispielsweise erhältlich unter den Handelsnamen Apyral 40 CD (Nabaltec GmbH, Schwandorf/Deutschland), Martinal OL-107 oder Martinal OL-104 (beide Martinswerk GmbH, Bergheim/Deutschland) oder Micral 632 (J. M. Huber Corporation, Edison NJ/U.S.A.).

Das eingesetzte Aluminiumhydroxidpulver hat vorzugsweise eine durchschnittliche Partikelgröße von 0.05 - 20 µm, bevorzugt 1 - 15 µm. Die spezifische Oberfläche, gemessen mit der BET Methode, des Aluminiumhydroxidpulvers beträgt vorzugsweise 0.1 - 20 m²/g, bevorzugt 1 - 10 m²/g. Bei durchschnittlichen Partikelgrößen über 20 µm bzw. spezifischen Oberflächen unter 0.1 m²/g sind die Partikel so groß, dass das Aluminiumhydroxidpulver unter Umständen nicht mehr homogen im Siliconkautschuk verteilt werden kann. Bei durchschnittlichen Partikelgrößen unter 0.05 µm bzw. spezifischen Oberflächen über 20 m²/g kann sich der Gehalt an Aluminiumhydroxid verstärkt auf die mechanischen Eigenschaften des Kautschuks auswirken.

Von der Komponente (C) werden vorzugsweise 50 - 300 Gewichtsteile, bezogen auf 100 Gewichtsteile der Komponente (A) eingesetzt. Bevorzugt sind 80 - 250 Gewichtsteile, noch bevorzugter 90 - 200 Gewichtsteile. Bei zu großen Anteilen Aluminiumhydroxid verschlechtern sich die Verarbeitbarkeit der Zusammensetzung und mechanische Eigenschaften des vernetzten Kautschuks, bei zu geringen Anteilen Aluminiumhydroxid erhält man nur eine unzureichende Verbesserung der elektrischen Eigenschaften des Kautschuks.

Komponente (C) kann als ein einziges Aluminiumhydroxidpulver eingesetzt werden oder es können Kombinationen von unterschiedlichen Aluminiumhydroxidpulvern eingesetzt werden, beispielsweise mit unterschiedlichen Partikelgrößen oder spezifischen Oberflächen oder mit unterschiedlichen Morphologien.

Komponente (D) ist ein Vernetzungsmittel, das in einer Menge zugegeben wird, die ausreicht, um die Zusammensetzung, gegebenenfalls bei erhöhter Temperatur, auszuhärten. Bevorzugt sind Vernetzungsmittel, die die Zusammensetzung erst bei erhöhter Temperatur aushärten, da sich dadurch die Lagerfähigkeit der unvernetzten Zusammensetzung verbessert.

Komponente (D) kann beispielsweise ein organisches oder anorganisches Peroxid sein oder eine Kombination aus einem Organohydrogenpolysiloxan und einem zumindest ein Übergangsmetall enthaltenden Hydrosilylierungskatalysator.

Ist die Komponente (D) ein Peroxid, so ist es ausgewählt aus der Gruppe der Dialkylperoxide, Diarylperoxide, Alkylarylperoxide, Aralkylperoxide und Hydroperoxide. Als Komponente (D) kann ein einzelnes Peroxid oder Hydroperoxid eingesetzt werden oder eine Kombination aus verschiedenen Peroxiden oder Peroxiden mit Hydroperoxiden. Der Anteil an Komponente (D), wenn (D) ein Peroxid ist, beträgt bevorzugt 0,1 bis 80 Gewichtsteile und besonders bevorzugt 0,5 bis 40 Gewichtsteile, jeweils bezogen auf 100 Gewichtsteile von (A).

Beispiele für organische Peroxide sind Acylperoxide, wie Dibenzoylperoxid, Bis-(4-chlorbenzoyl)-peroxid, Bis-(2,4-dichlorbenzoyl)-peroxid und Bis-(4-methylbenzoyl)-peroxid; Alkylperoxide und Arylperoxide, wie Di-tert.-butylperoxid, 2,5-Bis-(tert.-butylperoxy)-2,5-dimethylhexan, Dicumylperoxid und 1,3-Bis-(tert.-butylperoxy-isopropyl)-benzol; Perketale, wie 1,1-Bis-(tert.-butylperoxy)-3,3,5-trimethylcyclohexan; Perester, wie Diacetylperoxydicarbonat, tert.-Butylperbenzoat, Tert.-butylperoxy-isopropylcarbonat, Tert.-butylperoxy-isononanoat, Dicyclohexylperoxydicarbonat und 2,5-Dimethylhexan-2,5-diperbenzoat.

Ist die Kautschukzusammensetzung additionsvernetzend, so besteht die Komponente (D) aus einer Kombination aus einem Organohydrogenpolysiloxan und einem zumindest ein Übergangsmetall enthaltenden Hydrosilylierungskatalysator. Das Organohydrogenpolysiloxan hat dabei die allgemeine Formel (2)

R_{c}³H_{d}SiO_{(4-c-d)/2} (2)

wobei R³ ein substituierter oder unsubstituierter einwertiger Kohlenwasserstoffrest ist, der nicht aliphatisch ungesättigt ist. Jedes Molekül weist im Durchschnitt mindestens drei solche an Siliciumatome gebundene Wasserstoffatome auf. Die Indizes a und b sind positive Zahlen, mit der Maßgabe, dass die Gleichungen 1 ≤ c < 3, 0 < d ≤ 1 und 1 < c + d ≤ 3 erfüllt sind.

Beispiele für R³ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für substituierte Reste R³ sind Halogenalkylreste, wie der 3,3,3-Trifluor-n-propylrest, der 2,2,2,2',2',2'-Hexafluor-isopropylrest, der Heptafluorisopropylrest und Halogenarylreste, wie der o-, m- und p-Chlorphenylrest, sowie alle für R oben genannten Reste, die vorzugsweise mit Mercaptogruppen, epoxyfunktionellen Gruppen, Carboxygruppen, Ketogruppen, Enamingruppen, Aminogruppen, Aminoethylaminogruppen, iso-Cyanatogruppen, Aryloxygruppen, Acryloxygruppen, Methacryloxygruppen, Hydroxygruppen und Halogengruppen substituiert sein können.

Vorzugsweise wird das Organohydrogenpolysiloxan der allgemeinen Formel (2) so zugegeben, dass ein Überschuss Si-H bezogen auf Vinylgruppen im Kautschuk entsteht.

Als die Anlagerung von Si-gebundenem Wasserstoff an aliphatische Mehrfachbindung fördernde Katalysatoren können auch bei dem erfindungsgemäßen Verfahren die gleichen Katalysatoren eingesetzt werden, die auch bisher zur Förderung der Anlagerung von Si-gebundenem Wasserstoff an aliphatische Mehrfachbindung eingesetzt werden konnten. Bei den Katalysatoren handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. PtCl₄, H₂PtCl₆*6H₂O, Na₂PtCl₄*4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungs-produkten aus H₂PtCl₆*6H₂O und Cyclohexanon, Platin-Vinyl-siloxankomplexe, wie Platin-1,3-Divinyl-1,1,3,3-tetramethyl- disiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-di-chlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin, wie beispielsweise das Umsetzungsprodukt aus in 1-Octen gelöstem Platintetrachlorid mit sec.-Butylamin oder Ammonium-Platinkomplexe.

Der Katalysator wird bei dem erfindungsgemäßen Verfahren vorzugsweise in katalytischen Mengen eingesetzt.

Besonders bevorzugt sind solche Hydrosilylierungskatalysatoren, die bei der Lagertemperatur des unvernetzten Kautschuks, bevorzugt unter 40°C, inert sind, bei erhöhten Temperaturen die Zusammensetzung dagegen ausreichend schnell katalysieren.

Beispiele für derartige Hydrosilylierungskatalysatoren sind Platinverbindungen, ausgewählt aus der Gruppe bestehend aus Verbindungen der Formel (5) 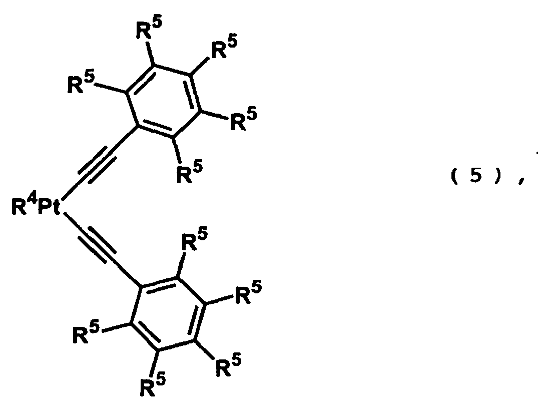 und/oder oligomeren oder polymeren Verbindungen, die aus Struktureinheiten der allgemeinen Formel (6) 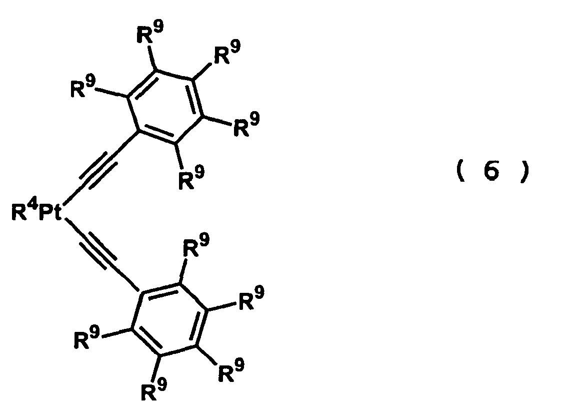 und gegebenenfalls Struktureinheiten der allgemeinen Formel (7)

R¹¹ᵣSiO_{(4-r)/2} (7)

zusammengesetzt sind,
wobei
- **R⁴**: ein gegebenenfalls substituiertes Dien bedeutet, das durch mindestens eine π-Bindung mit Platin verbunden ist und eine unverzweigte oder eine verzweigte Kette mit 4 bis 18 Kohlenstoffatomen oder einen cyclischen Ring mit 6 bis 28 Kohlenstoffatomen darstellt,
- **R⁵**: gleich oder verschieden sein kann und Wasserstoffatom, Halogenatom, -SiR**⁶**₃, -OR**⁸** oder einwertige, gegebenenfalls substituierte Kohlenwasserstoffreste mit 1 bis 24 Kohlenstoffatomen bedeutet, mit der Maßgabe, dass in den Verbindungen der Formel (5) mindestens ein Rest R**⁵** die Bedeutung von -SiR**⁶**₃ hat.
- **R⁶**: gleich oder verschieden sein kann und Wasserstoff, Halogenatom, -OR**⁸** oder einwertige, gegebenenfalls substituierte Kohlenwasserstoffreste mit 1 bis 24 Kohlenstoffatomen bedeutet,
- **R⁸**: gleich oder verschieden sein kann und Wasserstoffatom, -SiR**⁶**₃ oder ein einwertiger gegebenenfalls substituierter Kohlenwasserstoffrest mit 1 bis 20 Kohlenstoffatomen ist,
- **R⁹**: gleich oder verschieden sein kann und Wasserstoffatom, Halogenatom, -SiR**⁶**₃, -SiR**⁶**₍₃₋ₜ₎[R**¹⁰**SiR**¹¹**ₛO_{(3-s)/2}]ₜ, -OR**⁸** oder einwertige, gegebenenfalls substituierte Kohlenwasserstoffreste mit 1 bis 24 Kohlenstoffatomen bedeutet, mit der Maßgabe, dass in Formel (6) mindestens ein Rest R⁹ die Bedeutung von -SiR**⁶**₍₃₋ₜ₎[R**¹⁰**SiR**¹¹**ₛO_{(3-s)/2}]ₜ hat,
- **R¹⁰**: gleich oder verschieden sein kann und Sauerstoff oder zweiwertige, gegebenenfalls substituierte Kohlenwasserstoffreste mit 1 bis 24 Kohlenstoffatomen, die über Sauerstoffatom an das Silicium gebunden sein können, bedeutet,
- **R¹¹**: gleich oder verschieden sein kann und Wasserstoff oder einen organischen Rest bedeutet,
- r: 0, 1, 2 oder 3 ist,
- s: 0, 1, 2 oder 3 bedeutet und
- t: 1, 2 oder 3 ist.

Von dem Begriff Organopolysiloxane sollen sowohl polymere, oligomere wie auch dimere Siloxane mit umfasst werden.

Falls es sich bei R⁴ um ein substituiertes Dien bzw. bei den Resten R⁵, R⁶, R⁷, R⁸, R⁹ und R¹⁰ um substituierte Kohlenwasserstoffreste handelt, sind als Substituenten Halogenatome, wie F, Cl, Br und J, Cyanoreste, -NR⁸₂, Heteroatome, wie O, S, N und P, sowie Gruppen -OR⁸ bevorzugt, wobei R⁸ die oben genannte Bedeutung hat.

Beispiele für **R⁴** sind Diene, wie 1,3-Butadien, 1,4-Diphenyl-1,3-butadien, 1,3-Cyclohexadien, 1,4-Cyclohexadien, 2,4-Hexadien, 1,4-Hexadien, 1,5-Hexadien, 2,5-Dimethyl-2,4-Hexadien, α- und γ-Terpinen, (R)-(+)-4-Isopropenyl-1-methyl-1-cyclohexen, (S)-(-)-4-Isopropenyl-1-methyl-1-cyclohexen, 4-Vinyl-1-cyclohexen, 2,5-Heptadien, 1,5-Cyclooctadien, 1-Chlor-1,5-Cyclooctadien, 1,5-Dimethyl-1,5-cyclooctadien, 1,6-Dimethyl-1,5-cyclooctadien, 1,5-Dichlor-1,5-cyclooctadien, 5,8-Dihydro-1,4-dioxocin, **η⁴**-1,3,5,7-Cyclooctatetraen, **η⁴**-1,3,5-Cycloheptatrien, **η⁴**-1-Fluor-1,3,5,7-Cyclooctatetraen, **η⁴**-1,2,4,7-Tetramethyl-1,3,5,7-cyclooctatetraen, 1,8-Cyclotetradecadien, 1,9-Cyclohexadecadien, 1,13-Cyclotetracosadien, **η⁴**-1,5,9-Cyclododecatrien, **η⁴**-1,5,10-Trimethyl-1,5,9-cyclododecatrien, **η⁴**-1,5,9,13-Cyclohexadecatetraen, Bicyclo[2.2.1]hepta-2,5-dien, 1,3-Dodecadien, Methylcyclopentadien dimer, 4,7-Methylen-4,7,8,9-tetrahydroinden, Bicyclo[4.2.2]deca-3,9-dien-7,8-dicarbonsäureanhydrid, Bicyclo[4.2.2]deca-3,9-dien-7,8-dicarbonsäurealkylester und Bicyclo[4.2.2]deca-3,7,9-trien-7,8-dicarbonsäurealkylester.

Bevorzugt handelt es sich bei Dien **R⁴** um 1,5-Cyclooctadien, 1,5-Dimethyl-1,5-cyclooctadien, 1,6-Dimethyl-1,5-Cyclooctadien, 1-Chlor-1,5-Cyclooctadien, 1,5-Dichlor-1,5-Cyclooctadien, 1,8-Cyclotetradecadien, 1,9-Cyclohexadecadien, 1,13-Cyclotetracosadien, Bicyclo[2.2.1]hepta-2,5-dien, 4-Vinyl-1-cyclohexen, und η⁴-1,3,5,7-cyclooctatetraen, wobei 1,5-Cyclooctadien, Bicyclo[2.2.1]hepta-2,5-dien, 1,5-Dimethyl-1,5-cyclooctadien, 1,6-Dimethyl-1,5-cyclooctadien besonders bevorzugt sind.

Beispiele für **R⁵** sind Alkylreste, wie der Methyl-, Ethyl-, n-Propyl-, iso-Propyl-, 1-n-Butyl-, 2-n-Butyl-, iso-Butyl-, tert. Butyl-, n-Pentyl-, iso-Pentyl, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Cycloalkylreste, wie Cyclopropyl-, Cyclopentyl-, Cyclohexyl-, Cycloheptylreste und Methylcyclohexylreste, ungesättigte Reste, wie der Allyl-, 5-Hexenyl-, 7-Octenyl-, Cyclohexenyl- und Styrylrest, Arylreste, wie Phenylreste, o-,m-,p-Tolylreste, Xylylreste und Ethylphenylreste, Aralkylreste, wie der Benzylrest und der α- und β-Phenylethylrest, sowie Reste der Formel -C(R¹)=CR¹₂; weitere Beispiele für **R⁵** sind -OR**⁸**-Reste, wie Hydroxy-, Methoxy-, Ethoxy-, Isopropoxy-, Butoxy- und Phenoxyreste.
Beispiele für halogenierte Reste **R⁵** sind Halogenalkylreste, wie der 3,3,3-Trifluor-n-propylrest, der 2,2,2,2',2',2',-Hexafluorisopropylrest, der Heptafluorisopropylrest und Halogenarylreste, wie der o-,m-, und p-Chlorphenylrest. Beispiele für **R⁵** gleich Silylreste sind Trimethylsilyl-, Ethyldimethylsilyl-, Methoxydimethylsilyl-, n-Propyldimethylsilyl-, Isopropyldimethylsilyl-, n-Butyldimethylsilyl-, tert-Butyldimethylsilyl-, Octyldimethylsilyl-, Vinyldimethylsilyl-, Phenyldimethylsilyl-, Diphenylmethylsilyl-, Hydroxypropyldimethylsilyl-, Methylvinylphenylsilyl- und Methoxypropylsilylreste.

Bevorzugt handelt es sich bei Rest **R⁵** um Wasserstoffatom, Hydroxy-, Methoxyreste und Kohlenwasserstoffreste mit 1 bis 8 Kohlenstoffatomen sowie Trimethylsilyl-, Ethyldimethylsilyl-, Butyldimethylsilyl-, Octyldimethylsilylreste, wobei Wasserstoffatom, der Methylrest und der Trimethylsilylrest besonders bevorzugt sind.

Bevorzugt handelt es sich bei Rest **R⁶** um einwertige Kohlenwasserstoffreste mit 1 bis 24 Kohlenstoffatomen, wie z.B. die im Zusammenhang mit Rest **R⁵** genannten Beispiele, substituierte Kohlenwasserstoffreste, wie Hydroxypropyl-, und Chlorpropylrest und -OR⁸-Reste, wie Hydroxy-, Methoxy- und Ethoxyreste, wobei Methyl-, Ethyl-, Butyl-, Octyl-, Methoxy-, Ethoxy- und Hydroxypropylreste besonders bevorzugt sind.

Beispiele für Rest **R⁸** sind die für Rest **R⁵** angegebenen Reste. Bevorzugt handelt es sich bei **R⁸** um Wasserstoffatom, Alkylreste und Arylreste, wobei Wasserstoffatom, der Methyl- und der Ethylrest besonders bevorzugt sind.

Beispiele für Rest **R⁹** sind die für Rest **R⁵** angegebenen Reste sowie 1-Trimethylsiloxypropyl-3-dimethylsilyl-, 1-Ethyldimethylsiloxypropyl-3-dimethylsilyl-, 1-Methoxydimethylsiloxypropyl-3-dimethylsilyl- und Pentamethyldisiloxanylreste.

Bevorzugt handelt es sich bei **R⁹** um einwertige Reste, wie z.B. Wasserstoffatom, Methyl-, Methoxy-, Trimethylsilyl-, Ocytldimethylsilyl-, Dimethylmethoxysilyl-, 1-Trimethylsiloxypropyl-3-dimethylsilyl- und Hydroxypropyldimethylsilylreste sowie um mehrwertige Reste, wie -C₂H₄-, -Si(Me)₂-O-Si(Me)₂O_{1/2}, -Si(Me)₂-CH₂-CH₂-CH₂-O-Si(Me)₂O_{1/2}, -Si(Me)₂-O-Si(Me)O_{2/2}, -Si(Me)₂-O-SiO_{3/2}, -Si(Me)₂-CH₂-CH₂-Si (Me)₂O_{1/2} und -Si (Me)₂-CH₂-CH₂-Si (Me) O_{2/2}, wobei Me die Bedeutung von Methylrest hat.

Beispiele für Reste **R¹⁰** sind Sauerstoffatom sowie -CH₂-, -C₂H₄-, -C₃H₆-, -C₄H₈-, -C₆H₁₂-, -C₆H₄-, -CH₂CH(CH₃)-C₆H₄-CH(CH₃)CH₂- und-(CH₂)₃O-, wobei Sauerstoffatom, -C₂H₄-, -C₃H₆- und -(CH₂)₃O-besonders bevorzugt sind.

Beispiele für Rest **R¹¹** sind Wasserstoffatom sowie die für Rest **R¹** und Rest **R²** angegebenen Beispiele.

Bevorzugt handelt es sich bei **R¹¹** um einwertige Kohlenwasserstoffreste mit 1 bis 12 Kohlenstoffatomen, wobei Methyl-, Ethyl-, Phenyl- und Vinylreste besonders bevorzugt sind.

Beispiele der Einheiten der Formel (7) sind SiO_{4/2}-, (Me)₃SiO_{1/2}-, Vi(Me)₂SiO_{1/2}-, Ph(Me)₂SiO_{1/2}-, (Me)₂SiO_{2/2}-, Ph (Me) SiO_{2/2}-, Vi(Me)SiO_{2/2}-, H(Me)SiO_{2/2}-, MeSiO_{3/2}-, PhSiO_{3/2}-, ViSiO_{3/2}-, (Me)₂(MeO)SiO_{1/2}- und OH (Me)₂SiO_{1/2}-, wobei (Me)₃SiO_{1/2}-, Vi(Me)₂SiO_{1/2}-, (Me)₂SiO_{2/2}-, Ph(Me)SiO_{2/2}-, Vi(Me)SiO_{2/2}- und Me₂(MeO)SiO_{1/2}-MeSiO_{3/2}- bevorzugt und (Me)₃SiO_{1/2}-, Vi(Me)₂SiO_{1/2}-, (Me)₂SiO_{2/2}- und Vi(Me)SiO_{2/2}- besonders bevorzugt sind mit Me gleich Methylrest, Vi gleich Vinylrest und Ph gleich Phenylrest.

Wird als Bestandteil (D) ein Hydrosilylierungskatalysator nach Formel (5) bis (7) eingesetzt, so handelt es sich bevorzugt um Bis(alkinyl)(1,5-cyclooctadien)platin-, Bis(alkinyl)(bicyclo[2.2.1]hepta-2,5-dien)platin-, Bis(alkinyl)(1,5-dimethyl-1,5-cyclooctadien)platin- und Bis(alkinyl)(1,6-dimethyl-1,5-cyclooctadien)platin-Komplexe.

Der Bestandteil (E) ist essentiell für das Erreichen der gegenüber dem Stand der Technik verbesserten Eigenschaften der Zusammensetzung. Bestandteil (E) ist eine anorganische, organische oder siliciumorganische Base oder organische oder siliciumorganische Säure oder eine Verbindung, die bei Erwärmung eine anorganische, organische oder siliciumorganische Base oder organische oder siliciumorganische Säure freisetzt. Mögliche Basen sind Alkali- und Erdalkalihydroxide und Ammoniumhydroxid. Bevorzugt sind schwächere Basen wie beispielsweise organische Amine und Ammoniak und Salze organischer Amine und Ammoniumverbindungen NH₄X.

Beispiele organische oder siliciumorganische für organische Amine sind primäre, sekundäre oder tertiäre aliphatische Amine, wie beispielsweise Dimethylamin, Trimethylamin, N,N-Dimethyl-ethylamin, Ethylamin, Diethylamin, Triethylamin, Ethanolamin, Propylamin, Dipropylamin, Isopropylamin, Di-isopropylamin, Butylamin, sec-Butylamin, tert.-Butylamin, Dibutylamin, Tributylamin, Cyclohexylamin, Methyl-cyclohexylamin, Dimethylcyclohexylamin, 1-Aminooctan, 2-Aminooctan, Verbindungen mit zwei Aminogruppen, wie beispielsweise Ethylendiamin, Tetramethylethylendiamin und deren höhere Homologe; cyclische Amine, wie Piperazin, Piperidin, 4-Piperidon, 2,2,6,6-Tetramethyl-4-piperidon, Pyrrolidin, Aminopyrrolidin, Morpholin und deren AlkylDerivate; aromatische Amine wie Anilin, Dimethylanilin, Toluidine, Pyridin und deren Alkylderivate, Harnstoff und N-Alkylharnstoff-Derivate. Bevorzugt sind Ammoniak und die flüchtigeren Amine, die leicht wieder aus dem Kautschuk zu entfernen sind.

Mögliche Basen sind auch Salze dieser Amine und Ammoniumverbindungen NH₄X, wobei X beispielsweise für einen der nachgenannten Säurereste steht. Bevorzugte Beispiele sind Ammoniumcarbonat, Ammoniumhydrogencarbonat, Ammoniumcarbamat, Ammoniumcarboxylate wie Ammoniumformiat und Ammoniumacetat.

Beispiele für Säuren sind Sulfonsäuren. Bevorzugter sind schwächere Säuren, die eine weniger starke Tendenz zum Abbau der Polysiloxanketten aufweisen, wie beispielsweise Carbonsäuren, beispielsweise Oxalsäure, oder noch bevorzugter noch schwächere Säuren, wie beispielsweise Maleinsäure, Fumarsäure, Malonsäure, Ameisensäure, Essigsäure, Propionsäure sowie höhere Homologe der Monocarbonsäuren, sowie weitere Dicarbonsäuren, wie beispielsweise Bernsteinsäure, Glutarsäure, Adipinsäure, und Hydroxycarbonsäuren, wie beispielsweise Glycolsäure, Äpfelsäure, Zitronensäure, Milchsäure, Weinsäure oder Salicylsäure.

Beispiele für siliciumorganische Säuren oder Basen sind Aminosilane, wie beispielsweise Aminopropyl-trimethoxysilan, Aminopropyl-triethoxysilan, N-Aminoethylaminopropyltrimethoxysilan, N-Aminoethylaminopropyltriethoxysilan, Aminopropyltrimethylsilan, Acylaminosilane R¹²₃SiNR¹³C=O-R¹⁴, wobei R¹² gleich R¹ oder R⁶ sein kann und R¹³ und R¹⁴ unabhängig voneinander gleich R¹ oder R⁵ sein können, wie beispielsweise N-Trimethylsilylacetamid und N-Trimethylsilylformamid, N-Triorganosilylcarbaminsäureester, N-Triorganosilylcarbaminsäuretriorganosilylester, N-Triorganosilylharnstoffe, wie beispielsweise N,N'-dimethyl-N,N'-Bis-(trimethylsilyl)harnstoff, Dimethyl-trimethylsilylamin, Hexamethyldisilazan oder Divinyl-tetramethyl-disilazan.

Bevorzugt sind Säuren oder Basen, die aufgrund ihrer Säure- oder Basenstärke keine ausgeprägte Tendenz zum Abbau der Polysiloxankette aufweisen. Bevorzugt sind weiterhin flüchtige Verbindungen oder Verbindungen, die bei Erwärmung flüchtige oder besonders bevorzugt gasförmige Basen oder Säuren, wie beispielsweise Ammoniak freisetzen. Besonders bevorzugt sind daher thermisch sich zersetzende Salze, wie beispielsweise Ammoniumcarbonat, Ammoniumhydrogencarbonat, Ammoniumacetat oder Ammoniumcarbamat. Insbesondere bevorzugt ist Ammoniumcarbamat.

Vom Bestandteil (E) werden 0.01 - 10.0 Gewichtsteile, bezogen auf 100 Gewichtsteile (A) eingesetzt. Bevorzugt werden 0.1 - 6.0 Gewichtsteile eingesetzt, besonders bevorzugt 1.0 - 4.5 Gewichtsteile, bezogen auf 100 Gewichtsteile (A). Bei weniger als 0.01 Gewichtsteil ist keine erfindungsgemäße Wirkung des Additivs vorhanden, bei mehr als 10 Gewichtsteilen wird eine zu stark inhibierende Wirkung auf das Vernetzungssystem beobachtet, die unter Umständen auch eine Verschlechterung der mechanischen Eigenschaften durch Kettenabbau zur Folge haben.

Ist der Bestandteil (E) eine stickstoffhaltige Verbindung, wie beispielsweise ein Amin, Ammoniumsalz oder Silazan, so weist die Zusammensetzung nach Herstellung einen entsprechend erhöhten Stickstoffgehalt auf. Bei einem zu hohen Stickstoffgehalt von über 1000 ppm verschlechtert sich die Vernetzungscharakteristik der Zusammensetzung und die mechanische Festigkeit des vernetzten Kautschuks. Bei einem zu geringen Gehalt unter 10 ppm ist der Bestandteil (E) nicht erfindungsgemäß wirksam. Bevorzugt enthält die Siliconkautschukzusammensetzung daher mindestens 10 ppm, höchstens 1000 ppm Stickstoff, besonders bevorzugt mindestens 20, höchstens 500 ppm Stickstoff.

Neben den Bestandteilen (A) bis (E) können optional weitere Bestandteile in die Zusammensetzung eingearbeitet werden.

Als optionaler Bestandteil (F) kann ein Inhibitor verwendet werden, der die Vernetzungsgeschwindigkeit regelt. Als die Anlagerung von Si-gebundenem Wasserstoff an aliphatische Mehrfachbindung bei Raumtemperatur verzögernde Mittel, so genannte Inhibitoren, können auch bei den erfindungsgemäßen Zusammensetzungen alle Inhibitoren verwendet werden, die auch bisher für den gleichen Zweck verwendet werden konnten.

Beispiele für Inhibitoren sind 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25°C bei 1012 mbar (abs.) und mindestens einer aliphatischen Dreifachbindung, wie beispielsweise 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, 3,7-Dimethyl-oct-1-in-6-en-3-ol, eine Mischung aus Diallylmaleinat und Vinylacetat, Maleinsäuremonoester, und Inhibitoren wie die Verbindung der Formel HC=C-C(CH₃)(OH)-CH₂-CH₂-CH=C(CH₃)₂, beispielsweise erhältlich unter dem Handelsnamen "Dehydrolinalool" (BASF AG, Ludwigshafen/Deutschland).

Bevorzugt als Bestandteil (F) sind Ethinylcyclohexanol (ECH), Dehydrolinalool, 3-Methyldodecinol oder ein Diorganosiloxan-Oligomer, das eine durchschnittliche Kettenlänge von bis zu 50 Siloxyeinheiten aufweist und endständig 3-Methyl-3-hydroxy-but-1-in-4-oxy-Gruppen trägt. Besonders bevorzugt sind Ethinylcyclohexanol und das endständig 3-Methyl-3-hydroxy-but-1-in-4-oxy-Gruppen tragende Diorganosiloxan-Oligomer.

Als optionaler Bestandteil (G) können Zusätze verwendet werden, die eine weitere Verbesserung der elektrischen Eigenschaften, der Hitzebeständigkeit oder der Flammfestigkeit bewirken. Diese Zusätze können beispielsweise Metalloxide oder Metallhydroxide sein, wie Antimontrioxid, Ceroxid, Magnesiumoxid, Magnesiumhydroxid, Titandioxid, Zinkoxid, Zirkoniumdioxid oder Metall- oder Übergangsmetallverbindungen, wie Verbindungen des Palladiums oder Platins, gegebenenfalls in Kombination mit organischen Verbindungen, die die Aktivität dieser Verbindungen in Hydrosilylierungsreaktionen regulieren, oder Kombinationen solcher Zusätze.

Bevorzugt bei den Metalloxiden ist Titandioxid. In einer bevorzugten Ausführungsform besteht der Bestandteil (G) aus dem Umsetzungsprodukt einer Platinverbindung oder eines Platinkomplexes mit einer Organosiliciumverbindung, die über Kohlenstoff an das Silicium gebundenen basischen Stickstoff aufweist oder aus der Kombination eines derartigen Umsetzungsprodukts mit Titandioxid. Beispiele für derartige Platinverbindungen oder Platinkomplexe sind die beispielsweise in der europäischen Patentschrift EP 0 359 252 B1 beschriebenen H₂[PtCl₆]·6 H₂O, Platin-Olefin Komplexe, Platin-Alkohol Komplexe, Platin-Alkoholat Komplexe, Platin-Ether Komplexe, Platin-Vinylsiloxan Komplexe, insbesondere Platin-1,3-Divinyl-1,1,3,3-tetramethyldisiloxankomplexe oder die beispielsweise in der europäischen Patentschrift EP 1 077 226 B1 beschriebenen Cyclooctadien-Komplexe des Platins mit Acetylidliganden, insbesondere Bis(alkinyl)(1,5-cyclooctadien)platin-Komplexe. Bevorzugt sind Platin-1,3-Divinyl-1,1,3,3-tetramethyldisiloxankomplexe oder Cyclooctadien-Komplexe des Platins mit Acetylidliganden.

Beispiele für die Organosiliciumverbindungen, die über Kohlenstoff an Silicium gebundenen basischen Stickstoff aufweisen, sind N-(2-Aminoethyl)-3-aminopropyltrimethoxysilan, N-(2-Aminoethyl)-3-aminopropyltriethoxysilan, N-(2-Aminoethyl)-3-aminopropylmethyldimethoxysilan, 3-Aminopropyltrimethoxysilan, 3-Aminopropyltriethoxysilan, N-(Cyclohexyl)-3-aminopropyltrimethoxysilan, N-(2-Aminoethyl)-3-aminopropyltris(trimethylsiloxy)silan, 1,2-Bis[N-(2-aminoethyl)-3-aminopropyl]-1,1,2,2-tetramethyldisiloxan, N,N'-Bis-(3-(trimethoxysilyl)propyl)-1,2-ethandiamin, N,N-Bis(3-(trimethoxysilyl)propyl)-1,2-ethandiamin und N,N'-Bis(3-(trimethoxysilyl)propyl)-harnstoff.

Bevorzugt sind 3-Aminopropyltrimethoxysilan, 3-Aminopropyltriethoxysilan und N,N'-Bis-(3-(trimethoxysilyl)propyl)-1,2-ethandiamin.

Besonders bevorzugt sind N-(2-Aminoethyl)-3-aminopropyltrimethoxysilan und N-(2-Aminoethyl)-3-aminopropyltriethoxysilan.

Als weiterer optionaler Bestandteil (H) können weitere nicht-verstärkende Füllstoffe und Pigmente enthalten sein, sofern sie die gewünschten Eigenschaften der Zusammensetzung oder des vernetzten Kautschuks nicht beeinträchtigen. Die weiteren Bestandteile (H) können in Anteilen zwischen 0.001 und 100 Gewichtsteilen, bezogen auf 100 Gewichtsteile (A), enthalten sein. Beispiele für die weiteren Bestandteile (H) sind Russe, Graphit, Quarzmehl, Metallsalze von Carbonsäuren, wie beispielsweise Calciumstearat, Metalloxide oder Mischoxide, wie Eisenoxide, Cobalt-Aluminiumoxid Spinelle, Cobalt-Eisen-Chrom Spinelle, Aluminium-Chrom-Cobalt Spinelle und andere Spinelle, Ceroxid, Chromoxid, Titandioxid und Vanadiumoxid, sowie weiterhin Verarbeitungshilfsmittel, wie beispielsweise nichtfunktionelle Polydimethylsiloxane, hydroxy-terminierte Polydimethyl-siloxanöle, hydroxy-terminierte Poly-dimethylmethylvinyl-siloxanöle, Formtrennmittel und Weichmacher.

Die erfindungsgemäße Zusammensetzung kann durch einfaches Mischen der Bestandteile in einem für Siliconkautschuk-Zusammensetzungen üblicherweise verwendeten Mischaggregat (Kneter, Extruder, Zweiwalzenstuhl) hergestellt werden.

Bevorzugt ist eine Herstellung, bei der die Bestandteile (A), (B) und (C) zusammen mit (E) und gegebenenfalls optionalen Bestandteilen (F) - (H) in einem Kneter innig bis zur Homogenität vermischt werden.

Bevorzugt ist eine Herstellung, bei der der Bestandteil (E) zusammen mit den Bestandteilen (A), (B) und (C) und gegebenenfalls weiteren optionalen Bestandteilen in einem geeigneten Mischaggregat, beispielsweise in einem Kneter innig vermischt wird. Damit der Bestandteil (E) besonders wirksam ist, wird die Temperatur während des Mischvorgangs 10 Minuten bis fünf Stunden, bevorzugt 15 Minuten bis eine Stunde höher sein als 50°C, bevorzugt höher als 75°C, besonders bevorzugt höher als 85°C eingestellt. Das gilt insbesondere auch für thermisch flüchtige Säuren oder Basen freisetzende Verbindungen, wie Salze organischer Amine oder Ammoniumsalze wie beispielsweise Ammoniumcarbonat, Ammoniumhydrogencarbonat oder Ammoniumcarbamat. Solche bei Raumtemperatur festen Verbindungen müssen beim Mischvorgang vollständig aufgeschmolzen sein, da sonst schlechtere mechanische Eigenschaften am späteren Vulkanisat resultieren.
Nach Austragen der Zusammensetzung aus dem Kneter wird dieses Vorprodukt auf einem Walzwerk mit Bestandteil (D) fertig gestellt, wobei die Temperatur der Zusammensetzung unter der Temperatur bleiben muss, bei der eine Anvernetzung der Zusammensetzung stattfindet. Die optionalen Bestandteile (F) - (H) können statt im ersten Schritt auch erst zusammen mit Bestandteil (D) auf dem Walzwerk zugegeben werden.

In einer weiteren bevorzugten Ausführungsform werden zunächst in einem geeigneten Mischaggregat die Bestandteile (A) und (B) zusammen mit einem Oberflächenbehandlungsmittel unter Erwärmen bis zur Homogenität vermischt. Dieses Zwischenprodukt wird dann in einem zweiten Schritt in einem Kneter mit dem Bestandteil (C) unter Zusatz des Bestandteils (E) und gegebenenfalls optionalen Bestandteilen (F) - (H) innig bis zur Homogenität vermischt, wobei die Temperatur während des Mischvorgangs wiederum 10 Minuten bis fünf Stunden, bevorzugt 15 Minuten bis eine Stunde höher sein sollte als 50°C, bevorzugt höher als 75°C, besonders bevorzugt höher als 85°C. Anschließend wird dieses Vorprodukt wie oben auf einem Walzwerk mit Bestandteil (D) und optionalen Bestandteilen (F) - (H) fertig gestellt. Weist der Bestandteil (D) eine Zersetzungstemperatur auf, die über der im Kneter erreichten Temperatur liegt, so kann der Bestandteil (D) auch schon im Kneter eingearbeitet werden, gegebenenfalls nach Abkühlen des Kneters auf eine geeignete Temperatur nach dem Temperaturbehandlungsschritt.

In einer anderen bevorzugten Ausführungsform werden zunächst in einem Kneter Bestandteil (A) zusammen mit Bestandteil (C) unter Zusatz von (E) und gegebenenfalls optionalen Bestandteilen (F) - (H) unter Erwärmen bis zur Homogenität vermischt, wobei die Temperatur während des Mischvorgangs 10 Minuten bis fünf Stunden, bevorzugt 15 Minuten bis eine Stunde höher sein sollte als 50°C, bevorzugt höher als 75°C, besonders bevorzugt höher als 85°C. Dieses ist das ATH-haltige Vorprodukt 1. Dann werden in einem geeigneten Mischaggregat die Bestandteile (A) und (B) zusammen mit einem Oberflächenbehandlungsmittel unter Erwärmen bis zur Homogenität vermischt. Dieses ist das Vorprodukt 2. Anschließend werden Vorprodukt 1 und Vorprodukt 2 im gewünschten Verhältnis auf der Walze vermischt und zusammen mit Bestandteil (D) und gegebenenfalls optionalen Bestandteilen (F) - (H) zur fertigen Zusammensetzung fertig gestellt.

Neben den Bestandteilen (A) bis (E) können optional in allen bevorzugten Herstellverfahren weitere Bestandteile in die Zusammensetzung eingearbeitet werden.

Aus den erfindungsgemäßen Siliconkautschukzusammensetzungen werden durch die zuvor beschriebenen Vernetzungsverfahren die erfindungsgemäßen Siliconkautschuke erhalten.

Die so erhaltenen erfindungsgemäßen Siliconkautschuke eignen sich auf Grund ihrer hervorragenden mechanischen und elektrischen Eigenschaften besonders für die Herstellung von Hochspannungsisolatoren und Kabelummantelungen.

### Beispiele

### Herstellung der Basismischung 1:

In einem Kneter werden 100 Teile eines Dimethylvinylsilyloxy-terminierten Dimethylsiloxan-Methylvinylsiloxan Copolymers, das 99.94 mol-% Dimethylsiloxyeinheiten und 0.06 mol-% Methylvinylsiloxyeinheiten enthält und einen Polymerisationsgrad von etwa 6000 Siloxyeinheiten aufweist, mit 31 Teilen einer mit Vinylsilan behandelten Kieselsäure mit einer Oberfläche, gemessen nach der BET Methode, von 300 m²/g bis zur Homogenität vermischt.

### Herstellung der Basismischung 2:

In einem Kneter werden 100 Teile eines Dimethylvinylsilyloxy-terminierten Dimethylsiloxan-Methylvinylsiloxan Copolymers, das 99.94 mol-% Dimethylsiloxyeinheiten und 0.06 mol-% Methylvinylsiloxyeinheiten enthält und einen Polymerisationsgrad von etwa 6000 Siloxyeinheiten aufweist, mit 31 Teilen Kieselsäure mit einer Oberfläche, gemessen nach der BET Methode, von 300 m²/g und 7 Teilen eines Dimethylhydroxysiloxy-terminierten Dimethylsiloxan Oligomers mit einer Viskosität von 40 mPa•s bis zur Homogenität vermischt und zwei Stunden auf 170°C erhitzt.

### Herstellung der Basismischung 3:

In einem Kneter werden 100 Teile eines Dimethylvinylsilyloxy-terminierten Dimethylsiloxan-Methylvinylsiloxan Copolymers, das 99.94 mol-% Dimethylsiloxyeinheiten und 0.06 mol-% Methylvinylsiloxyeinheiten enthält und einen Polymerisationsgrad von etwa 6000 Siloxyeinheiten aufweist, mit 31 Teilen Kieselsäure mit einer Oberfläche, gemessen nach der BET Methode, von 300 m²/g, 5 Teilen eines Dimethylhydroxysiloxy-terminierten Dimethylsiloxan Oligomers mit einer Viskosität von 40 mPa·s und 5 Teilen eines Dimethylhydroxysiloxy-terminierten Dimethylsiloxan-Methylvinylsiloxan Copolymer-Oligomers mit einer Viskosität von 40 mPa•s und einem Methylvinylsiloxy-Gehalt von 10 mol-% bis zur Homogenität vermischt und zwei Stunden auf 170°C erhitzt.

### Vernetzer 1:

Vernetzer 1 ist Dicumylperoxid.

### Vernetzer 2:

Vernetzer 2 ist eine 50%ige Paste aus 2,5-Dimethyl-2,5-Bis(t-butylperoxy)hexan in Siliconöl.

### Vernetzer 3:

Vernetzer 3 ist ein trimethylsilyloxy-terminiertes Dimethylsiloxy-Methylhydrogensiloxy Copolymer, mit einer mittleren Kettenlänge von 150 Siloxyeinheiten, einem Si-H Gehalt von 0.5 Gew.-% und einer Viskosität von 360 mm²/s bei 25°C.

### Katalysator 1:

Katalysator 1 ist eine 0.025 Gew.-% Platin enthaltende Lösung eines 1,3-Divinyl-1,1,3,3-tetramethyldisiloxan-Platinkomplex in einem Dimethylvinylsilyloxy-terminierten Polydimethylsiloxan.

### Katalysator 2:

Katalysator 2 ist eine 0.025 Gew.-% Platin enthaltende Lösung von 1,5-Cyclooctadien-bis[trimethylsilylphenylethinyl]platin in einem Dimethylvinylsilyloxy-terminierten Polydimethylsiloxan.

### Additiv 1:

100 Teile eines Dimethylvinylsilyloxy-terminierten Dimethylsiloxan-Methylvinylsiloxan Copolymers, das 20 mol-% Methylvinylsiloxyeinheiten enthält und eine Viskosität bei 25°C von 50.000 mPa·s aufweist, werden in einem Rührwerk mit 50 Teilen pyrogen in der Gasphase erzeugtem Titandioxid homogen vermischt. Dazu werden 25 Teile einer 1 Gew.-% Pt (berechnet als Element) enthaltenden Mischung aus einem Platin-Vinylsiloxan-Komplex (bekannt als Karstedt Katalysator) in einem Dimethylvinylsilyloxy-terminierten Dimethylpolysiloxan mit einer Viskosität bei 25°C von 1400 mPa·s gegeben und bis zur Homogenität gemischt. Zu dieser Mischung werden 4 Teile N-(2-Aminoethyl)-3-aminopropyltrimethoxysilan gegeben, unter starkem Rühren langsam auf 150°C erhitzt und zwei Stunden bei 150°C gerührt.

### Additiv 2:

Additiv 2 ist eine 50 Gew.-%ige Mischung eines Cobalt-Aluminiumoxid-Spinells, erhältlich unter dem Handelsnamen Sicopal blau K 6310 (BASF AG, Ludwigshafen/Deutschland, in der Basismischung 1.

### Additiv 3:

Additiv 3 ist ein Dimethylsiloxan-Methylvinylsiloxan Copolymer-Oligomer, das eine durchschnittliche Kettenlänge von 12 Siloxyeinheiten und einen Methylvinylsiloxy-Gehalt von 8 mol-% aufweist und endständig 3-Methyl-3-hydroxy-but-1-in-4-oxy-Gruppen trägt.

### Beispiel 1:

In einem Kneter werden 100 Teile der Basismischung 2 mit 1.4 Teilen Ammoniumcarbamat und 145 Teilen unbehandeltem Aluminiumhydroxid (Micral® 632; J. M. Huber Corporation, Edison NJ/U.S.A.) unter Erwärmen bis zur Homogenität vermischt, so dass die Masse im Kneter mindestens 30 Minuten lang eine Temperatur von 100°C aufweist. 100 Teile dieser Mischung werden auf einer Walze mit 1.0 Teilen Vernetzer 2 fertig gestellt. Zur Herstellung von Probekörpern wird die Zusammensetzung 15 min bei 170°C verpresst und anschließend 4 Stunden bei 150°C getempert.

### Beispiel 2:

In einem Kneter werden 100 Teile der Basismischung 3 mit 1.4 Teilen Ammoniumcarbamat und 140 Teilen unbehandeltem Aluminiumhydroxid (Micral® 632; J. M. Huber Corporation, Edison NJ/U.S.A.) unter Erwärmen bis zur Homogenität vermischt, so dass die Masse im Kneter mindestens 30 Minuten lang eine Temperatur von 100°C aufweist. 100 Teile dieser Mischung werden auf einer Walze mit 1.0 Teilen Vernetzer 2 fertig gestellt. Zur Herstellung von Probekörpern wird die Zusammensetzung 15 min bei 170°C verpresst und anschließend 4 Stunden bei 150°C getempert.

### Beispiel 3:

In einem Kneter werden 100 Teile der Basismischung 2 mit 1.4 Teilen Ammoniumcarbamat und 130 Teilen unbehandeltem Aluminiumhydroxid (Micral® 632; J. M. Huber Corporation, Edison NJ/U.S.A.) unter Erwärmen bis zur Homogenität vermischt, so dass die Masse im Kneter mindestens 30 Minuten lang eine Temperatur von 100°C aufweist. 100 Teile dieser Mischung werden auf einer Walze mit 0.03 Teilen Ethinylcyclohexanol als Inhibitor, 3 Teilen Vernetzer 3 und 1 Teil Katalysator 1 fertig gestellt. Zur Herstellung von Probekörpern wird die Zusammensetzung 15 min bei 170°C verpresst.

### Beispiel 4:

In einem Kneter werden 100 Teile der Basismischung 2 mit 1.5 Teilen Ammoniumcarbamat, 140 Teilen unbehandeltem Aluminiumhydroxid (Micral® 632; J. M. Huber Corporation, Edison NJ/U.S.A.) und 20 Teilen eines Dimethylvinylsilyloxy-terminierten Dimethylsiloxan-Methylvinylsiloxan Copolymers, das 99.55 mol-% Dimethylsiloxyeinheiten und 0.45 mol-% Methylvinylsiloxyeinheiten enthält und einen Polymerisationsgrad von etwa 5500 Siloxyeinheiten aufweist, unter Erwärmen bis zur Homogenität vermischt, so dass die Masse im Kneter mindestens 30 Minuten lang eine Temperatur von 100°C aufweist. 100 Teile dieser Mischung werden auf einer Walze mit 0.03 Teilen Ethinylcyclohexanol als Inhibitor, 3 Teilen Vernetzer 3 und 1 Teil Katalysator 1 fertig gestellt. Zur Herstellung von Probekörpern wird die Zusammensetzung 15 min bei 170°C verpresst.

### Beispiel 5 (nicht erfindungsgemäß):

In einem Kneter werden 100 Teile der Basismischung 2 mit 130 Teilen unbehandeltem Aluminiumhydroxid (Micral® 632; J. M. Huber Corporation, Edison NJ/U.S.A.) bis zur Homogenität vermischt. 100 Teile dieser Mischung werden auf einer Walze mit 0.03 Teilen Ethinylcyclohexanol als Inhibitor, 3 Teilen Vernetzer 3 und 1 Teil Katalysator 1 fertig gestellt. Zur Herstellung von Probekörpern wird die Zusammensetzung 15 min bei 170°C verpresst.

### Beispiel 6:

In einem Kneter werden 100 Teile der Basismischung 2 mit 1.25 Teilen Ammoniumcarbamat, 125 Teilen unbehandeltem Aluminiumhydroxid (Martinal OL 104; Martinswerk GmbH, Bergheim/Deutschland), 2.5 Teilen eines Dimethylhydroxysiloxy-terminierten Dimethylsiloxan-Oligomers mit einer Viskosität von 40 mPa·s und 1.0 Teilen Calciumstearat als Verarbeitungshilfe unter Erwärmen bis zur Homogenität vermischt, so dass die Masse im Kneter mindestens 30 Minuten lang eine Temperatur von 100°C aufweist. 100 Teile dieser Mischung werden auf einer Walze mit 0.025 Teilen Ethinylcyclohexanol als Inhibitor, 3 Teilen Vernetzer 3, 0.7 Teilen Additiv 1 und 1 Teil Katalysator 2 fertig gestellt. Zur Herstellung von Probekörpern wird die Zusammensetzung 15 min bei 170°C verpresst.

### Beispiel 7:

In einem Kneter werden 100 Teile der Basismischung 2 mit 2.5 Teilen Ammoniumcarbamat, 150 Teilen unbehandeltem Aluminiumhydroxid (Micral® 632; J. M. Huber Corporation, Edison NJ/U.S.A.), 20 Teilen eines Dimethylvinylsilyloxy-terminierten Dimethylsiloxan-Methylvinylsiloxan Copolymers, das 99.55 mol-% Dimethylsiloxyeinheiten und 0.45 mol-% Methylvinylsiloxyeinheiten enthält und einen Polymerisationsgrad von etwa 5500 Siloxyeinheiten aufweist und 1 Teil Calciumstearat als Verarbeitungshilfe unter Erwärmen bis zur Homogenität vermischt, so dass die Masse im Kneter mindestens 30 Minuten lang eine Temperatur von 120°C aufweist. 100 Teile dieser Mischung werden auf einer Walze mit 0.025 Teilen Ethinylcyclohexanol als Inhibitor, 3 Teilen Vernetzer 3, 0.7 Teilen Additiv 1 und 1 Teil Katalysator 2 fertig gestellt. Zur Herstellung von Probekörpern wird die Zusammensetzung 15 min bei 170°C verpresst.

### Beispiel 8:

In einem Kneter werden 100 Teile der Basismischung 2 mit 2.5 Teilen Ammoniumcarbamat, 150 Teilen unbehandeltem Aluminiumhydroxid (Martinal OL 104; Martinswerk GmbH, Bergheim/Deutschland), 20 Teilen eines Dimethylvinylsilyloxy-terminierten Dimethylsiloxan-Methylvinylsiloxan Copolymers, das 99.55 mol-% Dimethylsiloxyeinheiten und 0.45 mol-% Methylvinylsiloxyeinheiten enthält und einen Polymerisationsgrad von etwa 5500 Siloxyeinheiten aufweist, 2.5 Teilen eines Dimethylhydroxysiloxy-terminierten Dimethylsiloxan-Methylvinylsiloxan Copolymer-Oligomers mit einer Viskosität von 40 mPa**•**s und einem Methylvinylsiloxy-Gehalt von 10 mol-% und 1 Teil Calciumstearat als Verarbeitungshilfe unter Erwärmen bis zur Homogenität vermischt, so dass die Masse im Kneter mindestens 30 Minuten lang eine Temperatur von 120°C aufweist. 100 Teile dieser Mischung werden auf einer Walze mit 0.025 Teilen Ethinylcyclohexanol als Inhibitor, 3 Teilen Vernetzer 3, 0.7 Teilen Additiv 1 und 1 Teil Katalysator 2 fertig gestellt. Zur Herstellung von Probekörpern wird die Zusammensetzung 15 min bei 170°C verpresst.

### Beispiel 9 (nicht erfindungsgemäß):

In einem Kneter werden 100 Teile der Basismischung 2, 150 Teilen unbehandeltem Aluminiumhydroxid (Martinal OL 104; Martinswerk GmbH, Bergheim/Deutschland), 20 Teilen eines Dimethylvinylsilyloxy-terminierten Dimethylsiloxan-Methylvinylsiloxan Copolymers, das 99.55 mol-% Dimethylsiloxyeinheiten und 0.45 mol-% Methylvinylsiloxyeinheiten enthält und einen Polymerisationsgrad von etwa 5500 Siloxyeinheiten aufweist, 2.5 Teilen eines Dimethylhydroxysiloxy-terminierten Dimethylsiloxan-Methylvinylsiloxan Copolymer-Oligomers mit einer Viskosität von 40 mPa•s und einem Methylvinylsiloxy-Gehalt von 10 mol-% und 1 Teil Calciumstearat als Verarbeitungshilfe bis zur Homogenität vermischt. 100 Teile dieser Mischung werden auf einer Walze mit 0.025 Teilen Ethinylcyclohexanol als Inhibitor, 3 Teilen Vernetzer 3, 0.7 Teilen Additiv 1 und 1 Teil Katalysator 2 fertig gestellt. Zur Herstellung von Probekörpern wird die Zusammensetzung 15 min bei 170°C verpresst.

### Beispiel 10:

In einem Kneter werden 100 Teile der Basismischung 2 mit 2.5 Teilen Ammoniumcarbamat, 150 Teilen unbehandeltem Aluminiumhydroxid (Martinal OL 104; Martinswerk GmbH, Bergheim/Deutschland), 20 Teilen eines Dimethylvinylsilyloxy-terminierten Dimethylsiloxan-Methylvinylsiloxan Copolymers, das 99.55 mol-% Dimethylsiloxyeinheiten und 0.45 mol-% Methylvinylsiloxyeinheiten enthält und einen Polymerisationsgrad von etwa 5500 Siloxyeinheiten aufweist, 2.5 Teilen eines Dimethylhydroxysiloxy-terminierten Dimethylsiloxan-Methylvinylsiloxan Copolymer-Oligomers mit einer Viskosität von 40 mPa•s und einem Methylvinylsiloxy-Gehalt von 10 mol-% und 1 Teil Calciumstearat als Verarbeitungshilfe unter Erwärmen bis zur Homogenität vermischt, so dass die Masse im Kneter mindestens 30 Minuten lang eine Temperatur von 120°C aufweist. 100 Teile dieser Mischung werden auf einer Walze mit 3 Teilen Vernetzer 3, 0.7 Teilen Additiv 1 und 1 Teil Katalysator 2 fertig gestellt. Es wird kein Inhibitor zugesetzt. Zur Herstellung von Probekörpern wird die Zusammensetzung 15 min bei 170°C verpresst.

### Beispiel 11:

In einem Kneter werden 100 Teile der Basismischung 2 mit 4.0 Teilen Ammoniumcarbamat, 150 Teilen unbehandeltem Aluminiumhydroxid (Martinal OL 104; Martinswerk GmbH, Bergheim/Deutschland), 20 Teilen eines Dimethylvinylsilyloxy-terminierten Dimethylsiloxan-Methylvinylsiloxan Copolymers, das 99.55 mol-% Dimethylsiloxyeinheiten und 0.45 mol-% Methylvinylsiloxyeinheiten enthält und einen Polymerisationsgrad von etwa 5500 Siloxyeinheiten aufweist, 2.5 Teilen eines Dimethylhydroxysiloxy-terminierten Dimethylsiloxan-Methylvinylsiloxan Copolymer-Oligomers mit einer Viskosität von 40 mPa•s und einem Methylvinylsiloxy-Gehalt von 10 mol-% und 1 Teil Calciumstearat als Verarbeitungshilfe unter Erwärmen bis zur Homogenität vermischt, so dass die Masse im Kneter mindestens 30 Minuten lang eine Temperatur von 120°C aufweist. 100 Teile dieser Mischung werden auf einer Walze mit 0.01 Teilen Ethinylcyclohexanol als Inhibitor, 3 Teilen Vernetzer 3, 0.7 Teilen Additiv 1 und 1 Teil Katalysator 2 fertig gestellt. Zur Herstellung von Probekörpern wird die Zusammensetzung 15 min bei 170°C verpresst.

### Beispiel 12:

Beispiel 12 wurde hergestellt wie in Beispiel 8, mit dem Unterschied, dass beim Homogenisieren die Temperatur im Kneter mindestens 30 min auf 90°C gehalten wurde.

### Beispiel 13 (nicht erfindungsgemäß):

Beispiel 13 wurde hergestellt wie in Beispiel 8, mit dem Unterschied, dass beim Homogenisieren die Temperatur im Kneter 60°C nicht überschritten hat.

### Beispiel 14:

Beispiel 14 ist identisch mit Beispiel 12, wobei aber die unvernetzte Zusammensetzung vor der Herstellung der Probekörper und der Messung der mechanischen Werte drei Monate bei Raumtemperatur gelagert wurde.

### Beispiel 15:

In einem Kneter werden 100 Teile der Basismischung 2 mit 2.0 Teilen Ammoniumcarbamat, 145 Teilen behandeltem Aluminiumhydroxid (Martinal OL 104/S; Martinswerk GmbH, Bergheim/Deutschland), 18 Teilen eines Dimethylvinylsilyloxy-terminierten Dimethylsiloxan-Methylvinylsiloxan Copolymers, das 99.55 mol-% Dimethylsiloxyeinheiten und 0.45 mol-% Methylvinylsiloxyeinheiten enthält und einen Polymerisationsgrad von etwa 5500 Siloxyeinheiten aufweist, 2.5 Teilen eines Dimethylhydroxysiloxy-terminierten Dimethylsiloxan-Methylvinylsiloxan Copolymer-Oligomers mit einer Viskosität von 40 mPa•s und einem Methylvinylsiloxy-Gehalt von 10 mol-% und 1 Teil Calciumstearat als Verarbeitungshilfe unter Erwärmen bis zur Homogenität vermischt, so dass die Masse im Kneter mindestens 30 Minuten lang eine Temperatur von 90°C aufweist. 100 Teile dieser Mischung werden auf einer Walze mit 0.025 Teilen Ethinylcyclohexanol als Inhibitor, 3 Teilen Vernetzer 3, 0.5 Teilen Additiv 1 und 1 Teil Katalysator 2 fertig gestellt. Zur Herstellung von Probekörpern wird die Zusammensetzung 15 min bei 170°C verpresst.

### Beispiel 16 (nicht erfindungsgemäß):

In einem Kneter werden 100 Teile der Basismischung 2 mit 145 Teilen behandeltem Aluminiumhydroxid (Martinal OL 104/S; Martinswerk GmbH, Bergheim/Deutschland), 18 Teilen eines Dimethylvinylsilyloxy-terminierten Dimethylsiloxan-Methylvinylsiloxan Copolymers, das 99.55 mol-% Dimethylsiloxyeinheiten und 0.45 mol-% Methylvinylsiloxyeinheiten enthält und einen Polymerisationsgrad von etwa 5500 Siloxyeinheiten aufweist, 2.5 Teilen eines Dimethylhydroxysiloxy-terminierten Dimethylsiloxan-Methylvinylsiloxan Copolymer-Oligomers mit einer Viskosität von 40 mPa·s und einem Methylvinylsiloxy-Gehalt von 10 mol-% und 1 Teil Calciumstearat als Verarbeitungshilfe bis zur Homogenität vermischt. 100 Teile dieser Mischung werden auf einer Walze mit 0.025 Teilen Ethinylcyclohexanol als Inhibitor, 3 Teilen Vernetzer 3, 0.5 Teilen Additiv 1 und 1 Teil Katalysator 2 fertig gestellt. Zur Herstellung von Probekörpern wird die Zusammensetzung 15 min bei 170°C verpresst.

### Beispiel 17:

In einem Kneter werden 100 Teile der Basismischung 1 mit 3.0 Teilen Ammoniumcarbonat, 145 Teilen unbehandeltem Aluminiumhydroxid (Apyral 40 CD; Nabaltec GmbH, Schwandorf/Deutschland), 16 Teilen eines Dimethylvinylsilyloxy-terminierten Dimethylsiloxan-Methylvinylsiloxan Copolymers, das 99.55 mol-% Dimethylsiloxyeinheiten und 0.45 mol-% Methylvinylsiloxyeinheiten enthält und einen Polymerisationsgrad von etwa 5500 Siloxyeinheiten aufweist, 1.5 Teilen Calciumstearat als Verarbeitungshilfe und 2.2 Teilen Additiv 2 unter Erwärmen bis zur Homogenität vermischt, so dass die Masse im Kneter mindestens 45 Minuten lang eine Temperatur von 110°C aufweist. 100 Teile dieser Mischung werden auf einer Walze mit 0.025 Teilen Ethinylcyclohexanol als Inhibitor, 0.8 Teilen Additiv 1, 3 Teilen Vernetzer 3 und 1 Teil Katalysator 2 fertig gestellt. Zur Herstellung von Probekörpern wird die Zusammensetzung 15 min bei 170°C verpresst.

### Beispiel 18:

In einem Kneter werden 100 Teile der Basismischung 1 mit 3.5 Teilen Ammoniumhydrogencarbonat, 145 Teilen unbehandeltem Aluminiumhydroxid (Apyral 40 CD; Nabaltec GmbH, Schwandorf/Deutschland), 16 Teilen eines Dimethylvinylsilyloxy-terminierten Dimethylsiloxan-Methylvinylsiloxan Copolymers, das 99.55 mol-% Dimethylsiloxyeinheiten und 0.45 mol-% Methylvinylsiloxyeinheiten enthält und einen Polymerisationsgrad von etwa 5500 Siloxyeinheiten aufweist, 1.5 Teilen Calciumstearat als Verarbeitungshilfe und 2.2 Teilen Additiv 2 unter Erwärmen bis zur Homogenität vermischt, so dass die Masse im Kneter mindestens 30 Minuten lang eine Temperatur von 110°C aufweist. 100 Teile dieser Mischung werden auf einer Walze mit 0.025 Teilen Ethinylcyclohexanol als Inhibitor, 0.8 Teilen Additiv 1, 3 Teilen Vernetzer 3 und 1 Teil Katalysator 2 fertig gestellt. Zur Herstellung von Probekörpern wird die Zusammensetzung 15 min bei 170°C verpresst.

### Beispiel 19:

In einem Kneter werden 100 Teile der Basismischung 1 mit 2.5 Teilen Essigsäure, 145 Teilen unbehandeltem Aluminiumhydroxid (Apyral 40 CD; Nabaltec GmbH, Schwandorf/Deutschland), 18 Teilen eines Dimethylvinylsilyloxy-terminierten Dimethylsiloxan-Methylvinylsiloxan Copolymers, das 99.55 mol-% Dimethylsiloxyeinheiten und 0.45 mol-% Methylvinylsiloxyeinheiten enthält und einen Polymerisationsgrad von etwa 5500 Siloxyeinheiten aufweist, 1.5 Teilen Calciumstearat als Verarbeitungshilfe und 2.2 Teilen Additiv 2 unter Erwärmen bis zur Homogenität vermischt, so dass die Masse im Kneter mindestens 30 Minuten lang eine Temperatur von 120°C aufweist. 100 Teile dieser Mischung werden auf einer Walze mit 0.045 Teilen Ethinylcyclohexanol als Inhibitor, 0.8 Teilen Additiv 1, 3 Teilen Vernetzer 3 und 1 Teil Katalysator 2 fertig gestellt. Zur Herstellung von Probekörpern wird die Zusammensetzung 15 min bei 170°C verpresst.

### Beispiel 20:

In einem Kneter werden 100 Teile der Basismischung 1 mit 3.5 Teilen Ammoniumhydrogencarbonat, 145 Teilen unbehandeltem Aluminiumhydroxid (Apyral 40 CD; Nabaltec GmbH, Schwandorf/Deutschland), 16 Teilen eines Dimethylvinylsilyloxy-terminierten Dimethylsiloxan-Methylvinylsiloxan Copolymers, das 99.55 mol-% Dimethylsiloxyeinheiten und 0.45 mol-% Methylvinylsiloxyeinheiten enthält und einen Polymerisationsgrad von etwa 5500 Siloxyeinheiten aufweist, 1.5 Teilen Calciumstearat als Verarbeitungshilfe und 2.2 Teilen Additiv 2 unter Erwärmen bis zur Homogenität vermischt, so dass die Masse im Kneter mindestens 30 Minuten lang eine Temperatur von 110°C aufweist. 100 Teile dieser Mischung werden auf einer Walze mit 0.8 Teilen Additiv 1, 3 Teilen Vernetzer 3 und 1 Teil Katalysator 2 fertig gestellt. Es wird kein Inhibitor zugesetzt. Zur Herstellung von Probekörpern wird die Zusammensetzung 15 min bei 170°C verpresst.

### Beispiel 21:

In einem Kneter werden 100 Teile der Basismischung 3 mit 1.5 Teilen Ammoniumcarbamat, 145 Teilen unbehandeltem Aluminiumhydroxid (Micral 623; J. M. Huber Corporation, Edison NJ/U.S.A.), 20 Teilen eines Dimethylvinylsilyloxy-terminierten Dimethylsiloxan-Methylvinylsiloxan Copolymers, das 99.55 mol-% Dimethylsiloxyeinheiten und 0.45 mol-% Methylvinylsiloxyeinheiten enthält und einen Polymerisationsgrad von etwa 5500 Siloxyeinheiten aufweist unter Erwärmen bis zur Homogenität vermischt, so dass die Masse im Kneter mindestens 30 Minuten lang eine Temperatur von 90°C aufweist. 100 Teile dieser Mischung werden auf einer Walze mit 1 Teil Additiv 1, 2 Teilen Additiv 3, 3 Teilen Vernetzer 3 und 1 Teil Katalysator 2 fertig gestellt. Zur Herstellung von Probekörpern wird die Zusammensetzung 15 min bei 170°C verpresst.

### Beispiel 22:

In einem Kneter werden 100 Teile der Basismischung 3 mit 2.0 Teilen Ammoniumcarbamat, 145 Teilen unbehandeltem Aluminiumhydroxid (Martinal OL 104; Martinswerk GmbH, Bergheim/Deutschland), 10 Teilen eines Dimethylvinylsilyloxy-terminierten Dimethylsiloxan-Methylvinylsiloxan Copolymers, das 99.55 mol-% Dimethylsiloxyeinheiten und 0.45 mol-% Methylvinylsiloxyeinheiten enthält und einen Polymerisationsgrad von etwa 5500 Siloxyeinheiten aufweist, 10 Teilen eines Dimethylvinylsilyloxy-terminierten Dimethylsiloxan-Methylvinylsiloxan Copolymers, das 99.94 mol-% Dimethylsiloxyeinheiten und 0.06 mol-% Methylvinylsiloxyeinheiten enthält und einen Polymerisationsgrad von etwa 6000 Siloxyeinheiten aufweist, 2.8 Teilen eines Dimethylhydroxysiloxy-terminierten Dimethylsiloxan-Methylvinylsiloxan Copolymer-Oligomers mit einer Viskosität von 40 mPa**•**s und einem Methylvinylsiloxy-Gehalt von 10 mol-% und 2.0 Teilen Calciumstearat als Verarbeitungshilfe unter Erwärmen bis zur Homogenität vermischt, so dass die Masse im Kneter mindestens 30 Minuten lang eine Temperatur von 90°C aufweist. 100 Teile dieser Mischung werden auf einer Walze mit 0.025 Teilen Ethinylcyclohexanol als Inhibitor, 0.8 Teilen Additiv 1, 3 Teilen Vernetzer 3 und 1 Teil Katalysator 2 fertig gestellt. Zur Herstellung von Probekörpern wird die Zusammensetzung 15 min bei 170°C verpresst.

### Beispiel 23:

In einem Kneter werden 100 Teile der Basismischung 3 mit 2.0 Teilen Ammoniumcarbamat, 150 Teilen unbehandeltem Aluminiumhydroxid (Martinal OL 104; Martinswerk GmbH, Bergheim/Deutschland), 18 Teilen eines Dimethylvinylsilyloxy-terminierten Dimethylsiloxan-Methylvinylsiloxan Copolymers, das 99.94 mol-% Dimethylsiloxyeinheiten und 0.06 mol-% Methylvinylsiloxyeinheiten enthält und einen Polymerisationsgrad von etwa 6000 Siloxyeinheiten aufweist, 3.0 Teilen eines Dimethylhydroxysiloxy-terminierten Dimethylsiloxan-Methylvinylsiloxan Copolymer-Oligomers mit einer Viskosität von 40 mPa•s und einem Methylvinylsiloxy-Gehalt von 10 mol-% und 2.0 Teilen Calciumstearat als Verarbeitungshilfe unter Erwärmen bis zur Homogenität vermischt, so dass die Masse im Kneter mindestens 30 Minuten lang eine Temperatur von 90°C aufweist. 100 Teile dieser Mischung werden auf einer Walze mit 0.025 Teilen Ethinylcyclohexanol als Inhibitor, 0.8 Teilen Additiv 1, 3 Teilen Vernetzer 3 und 1 Teil Katalysator 2 fertig gestellt. Zur Herstellung von Probekörpern wird die Zusammensetzung 15 min bei 170°C verpresst.

### Beispiel 24:

In einem Kneter werden 100 Teile der Basismischung 3 mit 2.0 Teilen Ammoniumcarbamat, 130 Teilen unbehandeltem Aluminiumhydroxid (Apyral 40 CD; Nabaltec GmbH, Schwandorf/Deutschland), 1.5 Teilen Titandioxid, 20 Teilen eines Dimethylvinylsilyloxy-terminierten Dimethylsiloxan-Methylvinylsiloxan Copolymers, das 99.55 mol-% Dimethylsiloxyeinheiten und 0.45 mol-% Methylvinylsiloxyeinheiten enthält und einen Polymerisationsgrad von etwa 5500 Siloxyeinheiten aufweist und 2.0 Teilen Calciumstearat als Verarbeitungshilfe unter Erwärmen bis zur Homogenität vermischt, so dass die Masse im Kneter mindestens 30 Minuten lang eine Temperatur von 90°C aufweist. 100 Teile dieser Mischung werden auf einer Walze mit 0.025 Teilen Ethinylcyclohexanol als Inhibitor, 2.5 Teilen Vernetzer 3 und 1 Teil Katalysator 2 fertig gestellt. Zur Herstellung von Probekörpern wird die Zusammensetzung 15 min bei 170°C verpresst.

### Herstellung der Basismischung 4:

In einem Kneter werden 100 Teile eines Dimethylvinylsilyloxy-terminierten Dimethylsiloxan-Methylvinylsiloxan Copolymers, das 99.55 mol-% Dimethylsiloxyeinheiten und 0.45 mol-% Methylvinylsiloxyeinheiten enthält und einen Polymerisationsgrad von etwa 5500 Siloxyeinheiten aufweist, mit 4 Teilen eines Dimethylhydroxysiloxy-terminierten Dimethylsiloxan-Methylvinylsiloxan Copolymer-Oligomers mit einer Viskosität von 40 mPa**•**s und einem Methylvinylsiloxy-Gehalt von 10 mol-%, 4 Teilen Ammoniumcarbamat und 290 Teilen unbehandeltem Aluminiumhydroxid (Martinal OL 104; Martinswerk GmbH, Bergheim/Deutschland) unter Erwärmen bis zur Homogenität vermischt, so dass die Masse im Kneter mindestens 30 Minuten lang eine Temperatur von 100°C aufweist.

### Beispiel 25:

100 Teile der Basismischung 4 werden auf der Walze mit 45 Teilen der Basismischung 3 homogenisiert. 100 Teile der so hergestellten Mischung werden wiederum auf der Walze mit 0.05 Teilen Ethinylcyclohexanol als Inhibitor, 3 Teilen Vernetzer 3 und 1 Teil Katalysator 1 fertig gestellt. Zur Herstellung von Probekörpern wird die Zusammensetzung 15 min bei 170°C verpresst.

### Beispiel 26:

100 Teile der Basismischung 4 werden auf der Walze mit 45 Teilen der Basismischung 3 homogenisiert. 100 Teile der so hergestellten Mischung werden wiederum auf der Walze mit 0.05 Teilen Ethinylcyclohexanol als Inhibitor, 3 Teilen Vernetzer 3 und 1 Teil Katalysator 2 fertig gestellt. Zur Herstellung von Probekörpern wird die Zusammensetzung 15 min bei 170°C verpresst.

Die Messergebnisse der zuvor genannten Beispiele fassen die Tabellen 1a und 1b zusammen. Dabei erfolgte die Messung der Shore Härten nach DIN 53505-A an 6 mm dicken Probekörpern. Die Messung der Reißfestigkeiten und Reißdehnungen wurde nach DIN 53504 an 2 mm dicken Sl Schulterstäben durchgeführt. Die Messung der Weiterreißwiderstände erfolgte nach ASTM D 624 B an 2 mm dicken Probekörpern. Die Messung der Anspringtemperaturen erfolgte nicht-isotherm nach DIN 53529-A3 und die Messung der T 50 Werte wurde isotherm bei 150°C nach DIN 53529-A3 durchgeführt.

**Tabelle 1a**

| Beispiel | Härte [Shore A] | Reißfestigkeit [N/mm²] | Reißdehnung [%] | Weiterreiß-festigkeit [N/mm] | Topfzeit bei RT [d] | Topfzeit bei 50°C [d] | Anspringtemperatur [°C] | T 50 [s] |
|---|---|---|---|---|---|---|---|---|
| 1 | 79 | 3.0 | 505 | 16.8 | - | - | - | - |
| 2 | 77 | 3.6 | 571 | 17.5 | - | - | - | - |
| 3 | 75 | 3.0 | 512 | 13.9 | - | - | - | - |
| 4 | 77 | 3.3 | 335 | 16.8 | - | - | - | - |
| 5* | 76 | 2.9 | 423 | 12.9 | < 3 | < 1 | 108 | 14 |
| 6 | 73 | 3.1 | 451 | 16.4 | > 180 | 45 | 138 | 31 |
| 7 | 79 | 3.6 | 223 | 16.6 | > 180 | 17 | - | - |
| 8 | 77 | 3.5 | 261 | 14.9 | > 180 | 19 | 132 | 32 |
| 9* | 77 | 3.3 | 249 | 13.9 | 25 | 1 | 117 | 19 |
| 10 | 79 | 4.1 | 267 | 14.6 | 55 | 4 | 116 | 36 |
| 11 | 78 | 3.4 | 230 | 14.0 | 170 | 8 | 127 | 30 |
| 12 | 77 | 3.7 | 256 | 14.5 | > 180 | 22 | 133 | 36 |
| 13* | 74 | 2.4 | 77 | 12.4 | > 180 | 18 | 144 | 54 |

| | | | | | | | | |
|---|---|---|---|---|---|---|---|---|
| * nicht erfindungsgemäß | | | | | | | | |

**Tabelle 1b**

| Bei- spiel | Härte [Shore A] | Reißfestigkeit [N/mm²] | Reißdehnung [%] | Weiterreißfestigkeit [N/mm] | Topfzeit bei RT [d] | Topfzeit bei 50°C [d] | Anspring-temperatur [°C] | T 50 [s] |
|---|---|---|---|---|---|---|---|---|
| 14 | 76 | 3.9 | 276 | 14.2 | - | - | 132 | 30 |
| 15 | 73 | 4.4 | 286 | 15.6 | > 180 | 22 | 133 | 51 |
| 16* | 74 | 4.0 | 216 | 15.2 | 27 | 2 | 117 | 27 |
| 17 | 69 | 2.9 | 253 | 16.7 | > 180 | 39 | 134 | 43 |
| 18 | 74 | 3.3 | 223 | 16.4 | > 180 | 13 | 126 | 27 |
| 19 | 72 | 3.0 | 245 | 13.7 | 140 | 7 | 121 | 23 |
| 20 | 73 | 3.5 | 253 | 14.3 | 51 | 4 | 114 | 28 |
| 21 | 76 | 4.0 | 289 | 15.9 | > 180 | 44 | 134 | 29 |
| 22 | 73 | 3.6 | 386 | 17.9 | > 180 | 38 | 130 | 35 |
| 23 | 76 | 4.0 | 324 | 15.8 | > 180 | 33 | 131 | 28 |
| 24 | 78 | 3.8 | 306 | 16.9 | > 180 | 29 | 130 | 28 |
| 25 | 70 | 3.4 | 320 | 16.4 | 45 | 12 | - | - |
| 26 | 73 | 3.5 | 286 | 15.9 | > 180 | 69 | - | - |

| | | | | | | | | |
|---|---|---|---|---|---|---|---|---|
| * nicht erfindungsgemäß | | | | | | | | |

Die Messergebnisse zur elektrischen Prüfung einiger ausgewählter der zuvor genannten Beispiele fasst Tabelle 2 zusammen. Dabei erfolgte die Prüfung der Durchschlagfestigkeit nach DIN IEC 243-2 und die Prüfung des spezifischen Durchgangswiderstands nach DIN IEC 93. Die Prüfung der Hochspannungs-Lichtbogenfestigkeit wurde nach DIN VDE 0441 Teil 1 und die Prüfung der Hochspannungs-Kriechstromfestigkeit nach DIN IEC 587 (VDE 0303 Teil 10) durchgeführt.

**Tabelle 2**

| **Beispiel** | **Durchschlagsfestigkeit** **[kV/mm]** | **Spez. Durchgangswiderstand [Ω•cm]** | **Hochspannungslichtbogenfestigkeit [s]** | **Hochspannungskriechstromfestigkeit** |
|---|---|---|---|---|
| **2** | 22 | 8.13•10¹⁴ | 339 | 1 A 4.5 |
| **8** | 22 | 1.30•10¹⁵ | 320 | 1 A 4.5 |
| **15** | 21 | 1.15•10¹⁵ | 312 | 1 A 4.5 |
| **18** | 22 | 1.02•10¹⁵ | 315 | 1 A 4.5 |

Die Messergebnisse zur elektrischen Prüfung nach Knochen einiger ausgewählter der zuvor genannten Beispiele fasst Tabelle 3 zusammen. Die Prüfungen erfolgten dabei nach den zuvor genannten Normen. Die Proben nach Knochen wurden vorher 100 Stunden in deionisiertem Wasser mit 0.1%igem Zusatz von Natriumchlorid gelagert und hatten eine Probendicke von 3 mm.

**Tabelle 3**

| **Beispiel** | **Durchschlagfestigkeit** **[kV/mm]** | | **Dielektrizitätskonstante ε** | | **Verlustfaktor tan δ** | |
|---|---|---|---|---|---|---|
| | vor Kochen | nach Kochen | vor Kochen | nach Kochen | vor Kochen | nach Kochen |
| **2** | 12.4 | 11.9 | 3.6 | 4.7 | 0.006 | 0.075 |
| **8** | 13.4 | 12.6 | 3.7 | 4.6 | 0.006 | 0.083 |
| **15** | 13.3 | 12.3 | 3.7 | 4.3 | 0.006 | 0.079 |
| **18** | 13.1 | 12.7 | 3.7 | 4.7 | 0.006 | 0.082 |

## Patentansprüche

1. Siliconkautschukzusammensetzungen, enthaltend
(A) 100 Gewichtsteile von mindestens einem Diorganopolysiloxan mit der allgemeinen Formel (1)
R¹ₐR²_{b}SiO_{(4-a-b)/2} (1)
wobei
R¹ ein unsubstituierter oder halogensubstituierter einwertiger Kohlenwasserstoffrest mit 1 bis 20 Kohlenstoffatomen ist, der frei ist von aliphatisch ungesättigten Gruppen,
R² ein unsubstituierter oder halogensubstituierter einwertiger Kohlenwasserstoffrest ist, der zumindest eine aliphatisch Kohlenstoff-Kohlenstoff-Mehrfachbindung enthält, wobei jedes Molekül im Durchschnitt mindestens zwei solche an Siliciumatome gebundenen einwertige Kohlenwasserstoffreste enthaltend aliphatisch Kohlenstoff-Kohlenstoff-Mehrfachbindungen aufweist und
a, b unabhängig voneinander positive Zahlen, mit der Maßgabe, dass 1 ≤ a < 3, 0 < b ≤ 1 und 1 < a + b ≤ 3 ist,
(B) 1 bis 100 Gewichtsteile, bezogen auf 100 Gewichtsteile (A), hochdisperse Kieselsäure mit einer spezifischen Oberfläche, gemessen mit der BET Methode, von 50 - 300 m²/g,
(C) 50 - 300 Gewichtsteile, bezogen auf 100 Gewichtsteile (A) mindestens eines Aluminiumhydroxidpulvers mit einer spezifischen Oberfläche, gemessen nach der BET Methode, von 0.1 - 20 m²/g und einer durchschnittlichen Partikelgröße von 0.05 - 20 µm,
(D) Vernetzungsmittel in einer Menge, die ausreicht, um die Zusammensetzung zu härten, wobei dieses Vernetzungsmittel ausgewählt wird aus der Gruppe enthaltend
(D1) ein organisches Peroxid, Hydroperoxid oder eine Mischung aus verschiedenen organischen Peroxiden oder Hydroperoxiden
(D2) eine Kombination aus einem Organohydrogenpolysiloxan mit der allgemeinen Formel (2)
R_{c}³H_{d}SiO_{(4-c-d)/2} (2)
wobei
R³ ein substituierter oder unsubstituierter einwertiger Kohlenwasserstoffrest ist, der nicht aliphatisch ungesättigt ist, jedes Molekül im Durchschnitt zumindest drei solche an Siliciumatome gebundene Wasserstoffatome aufweist,
c, d unabhängig voneinander positive Zahlen, mit der Maßgabe, dass 1 ≤ c < 3, 0 < d ≤ 1 und 1 < c + d ≤ 3 ist,
und
einem zumindest ein Übergangsmetall enthaltenden Hydrosilylierungskatalysator,
(E) 0.01 - 10.0 Gewichtsteile, bezogen auf 100 Gewichtsteile (A) einer anorganischen, organischen oder siliciumorganischen Base oder organischen oder siliciumorganischen Säure oder einer Verbindung, die bei Erwärmung eine anorganische, organische oder siliciumorganische Base oder organischen oder siliciumorganischen Säure freisetzt.

2. Siliconkautschukzusammensetzung gemäß Anspruch 1, **dadurch gekennzeichnet, dass** die Base (E) ausgewählt wird aus der Gruppe enthaltend Alkali- und Erdalkalihydroxide, Ammoniumhydroxid, organische primäre, sekundäre und tertiäre Amine, Ammoniak, Salze organischer Amine und Ammoniumverbindungen.

3. Siliconkautschukzusammensetzung gemäß Anspruch 2, **dadurch gekennzeichnet, dass** die Base (E) Ammoniumcarbonat, Ammoniumhydrogencarbonat, Ammoniumacetat oder Ammoniumcarbamat ist.

4. Siliconkautschukzusammensetzung gemäß Anspruch 1, **dadurch gekennzeichnet, dass** die Säure (E) ausgewählt wird aus der Gruppe enthaltend Sulfonsäuren, Monocarbonsäuren, Dicarbonsäuren und Hydroxycarbonsäuren.

5. Siliconkautschukzusammensetzung gemäß Anspruch 1, **dadurch gekennzeichnet, dass** der Bestandteil (E) ausgewählt wird aus der Gruppe enthaltend Aminosilane, Acylaminosilane, N-Triorganosilylcarbaminsäureester, N-Triorganosilylcarbaminsäuretriorganosilylester, N-Triorganosilylharnstoffe, Dimethyl-trimethylsilylamin, Hexamethyldisilazan und Divinyl-tetramethyl-disilazan.

6. Siliconkautschukzusammensetzung gemäß Ansprüchen 1, 2, 3 oder 5, **dadurch gekennzeichnet, dass** die Siliconkautschukzusammensetzung mindestens 10 ppm und höchstens 1000 ppm Stickstoff enthält.

7. Siliconkautschukzusammensetzung gemäß den Ansprüchen 1 bis 6, **dadurch gekennzeichnet, dass** (D) eine Kombination aus einem Organohydrogenpolysiloxan mit der allgemeinen Formel (2):
R_{c}³H_{d}SiO_{(4-c-d)/2} (2),
wobei
R³ ein substituierter oder unsubstituierter einwertiger Kohlenwasserstoffrest ist, der nicht aliphatisch ungesättigt ist, jedes Molekül im Durchschnitt mindestens drei solche an Siliciumatome gebundene Wasserstoffatome aufweist,
c,d unabhängig von einander eine positive Zahlen mit der Maßgabe, dass 1 ≤ c < 3, 0 < d ≤ 1 und 1 < c + d ≤ 3 ist,
bedeuten, und
einem zumindest ein Übergangsmetall enthaltenden Hydrosilylierungskatalysator ist.

8. Siliconkautschukzusammensetzung gemäß Anspruch 7, **dadurch gekennzeichnet, dass** der Hydrosilylierungskatalysator ausgewählt wird aus der Gruppe bestehend aus Verbindungen der Formel (5) 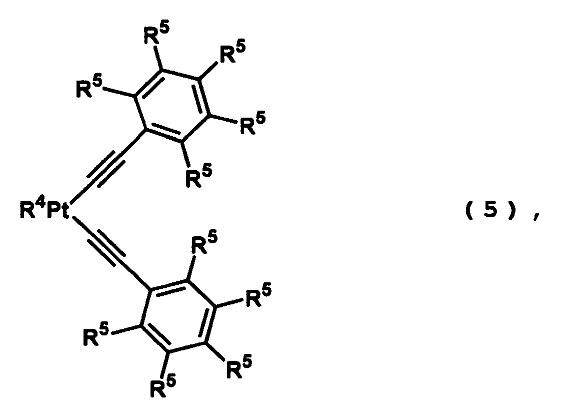 oligomeren oder polymeren Verbindungen, die aus Struktureinheiten der allgemeinen Formel (6) 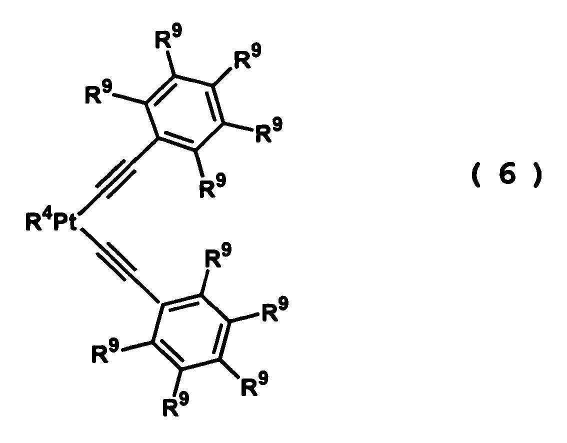 und gegebenenfalls Struktureinheiten der allgemeinen Formel (7)
R¹¹ᵣSiO_{(4-r)/2} (7)
zusammengesetzt sind,
wobei
**R⁴** ein gegebenenfalls substituiertes Dien bedeutet, das durch mindestens eine **π**-Bindung mit Platin verbunden ist und eine unverzweigte oder eine verzweigte Kette mit 4 bis 18 Kohlenstoffatomen oder einen cyclischen Ring mit 6 bis 28 Kohlenstoffatomen darstellt,
**R⁵** gleich oder verschieden sein kann und Wasserstoffatom, Halogenatom, -SiR**⁶**₃, -OR**⁸** oder einwertige, gegebenenfalls substituierte Kohlenwasserstoffreste mit 1 bis 24 Kohlenstoffatomen bedeutet, mit der Maßgabe, dass in den Verbindungen der Formel (5) mindestens ein Rest R⁵ die Bedeutung von -SiR**⁶**₃ hat.
**R⁶** gleich oder verschieden sein kann und Wasserstoff, Halogenatom, -OR**⁸** oder einwertige, gegebenenfalls
substituierte Kohlenwasserstoffreste mit 1 bis 24 Kohlenstoffatomen bedeutet,
**R⁸** gleich oder verschieden sein kann und Wasserstoffatom, -SiR**⁶**₃ oder ein einwertiger gegebenenfalls substituierter Kohlenwasserstoffrest mit 1 bis 20 Kohlenstoffatomen ist,
**R⁹** gleich oder verschieden sein kann und Wasserstoffatom, Halogenatom, -SiR**⁶**₃, -SiR**⁶**₍₃₋ₜ₎[R**¹⁰**SiR**¹¹**ₛO_{(3-s)/2}]ₜ, -OR**⁸** oder einwertige, gegebenenfalls substituierte Kohlenwasserstoffreste mit 1 bis 24 Kohlenstoffatomen bedeutet, mit der Maßgabe, dass in Formel (6) mindestens ein Rest R⁹ die Bedeutung von -SiR**⁶**₍₃₋ₜ₎[R**¹⁰**SiR**¹¹**ₛO_{(3-5)/2}]ₜ hat,
**R¹⁰** gleich oder verschieden sein kann und Sauerstoff oder zweiwertige, gegebenenfalls substituierte Kohlenwasserstoffreste mit 1 bis 24 Kohlenstoffatomen, die über Sauerstoffatom an das Silicium gebunden sein können, bedeutet,
**R¹¹** gleich oder verschieden sein kann und Wasserstoff oder einen organischen Rest bedeutet,
r 0, 1, 2 oder 3 ist,
s 0, 1, 2 oder 3 bedeutet und
t 1, 2 oder 3 ist.

9. Siliconkautschukzusammensetzung gemäß Anspruch 8, **dadurch gekennzeichnet, dass** der Hydrosilylierungskatalysator ausgewählt wird aus der Gruppe bestehend aus Bis(alkinyl)(1,5-cyclooctadien)platin-, Bis(alkinyl)(bicyclo[2.2.1]hepta-2,5-dien)platin-, Bis(alkinyl)(1,5-dimethyl-1,5-cyclooctadien)platin- und Bis(alkinyl)(1,6-dimethyl-1,5-cyclooctadien)platin-Komplexen.

10. Siliconkautschukzusammensetzung gemäß den Ansprüchen 1 bis 9, **dadurch gekennzeichnet, dass** die Siliconkautschukzusammensetzung zusätzlich einen Inhibitor enthält.

11. Siliconkautschukzusammensetzung gemäß den Ansprüchen 1 bis 6, **dadurch gekennzeichnet, dass** (D) ein organisches Peroxid, Hydroperoxid oder eine Mischung aus verschiedenen organischen Peroxiden oder Hydroperoxiden ist.

12. Siliconkautschukzusammensetzung gemäß einem der Ansprüche 1 bis 11, **dadurch gekennzeichnet, dass** die Komponente (B) mit Siliciumverbindungen oder hydroxy-terminierten Diorganosiloxan-Oligomeren oberflächenbehandelt ist, wobei der Anteil dieser Siliciumverbindungen oder hydroxy-terminierten Diorganosiloxan-Oligomeren, der ungesättigte Gruppen enthält, bei mindestens 10% liegt.

13. Siliconkautschukzusammensetzung gemäß einem der Ansprüche 1 bis 12, **dadurch gekennzeichnet, dass** die Siliconkautschukzusammensetzung zusätzlich ein Metalloxid enthält.

14. Siliconkautschukzusammensetzung gemäß einem der Ansprüche 1 bis 13, **dadurch gekennzeichnet, dass** die Siliconkautschukzusammensetzung zusätzlich eine Platinverbindung oder einen Platinkomplex oder das Umsetzungsprodukt einer Platinverbindung oder eines Platinkomplexes mit einer Organosiliciumverbindung, die über Kohlenstoff an das Silicium gebundenen basischen Stickstoff aufweist, enthält.

15. Siliconkautschukzusammensetzung gemäß einem der Ansprüche 1 bis 14, **dadurch gekennzeichnet, dass** die Siliconkautschukzusammensetzung weitere Füllstoffe enthält.

16. Verfahren zur Herstellung der Siliconkautschukzusammensetzungen gemäß einem der Ansprüche 1 bis 15, **dadurch gekennzeichnet, dass** die Bestandteile durch Mischen in einem Mischaggregat hergestellt werden.

17. Verfahren gemäß Anspruch 16, **dadurch gekennzeichnet, dass** der Bestandteil (E) zusammen mit den Bestandteilen (A), (B) und (C) und gegebenenfalls weiteren optionalen Bestandteilen (F) - (H) in einem geeigneten Mischaggregat vermischt und nach dem Austragen des Vorprodukt aus dem Mischaggregat auf einem Walzwerk mit Bestandteil (D) fertig gestellt wird.

18. Verfahren gemäß Anspruch 16 oder 17, **dadurch gekennzeichnet, dass** die Temperatur während des Einmischens des Bestandteils (E) zumindest für 10 Minuten höher als 50°C beträgt.

19. Siliconkautschuk erhältlich durch Vernetzung der Siliconkautschukzusammensetzungen gemäß den Ansprüchen 1 bis 15.

20. Verfahren zur Herstellung eines vernetzten Siliconkautschuks gemäß Anspruch 19 durch Vernetzung eine Siliconkautschukzusammensetzung gemäß den Ansprüchen 1 bis 15.

21. Verwendung der Siliconkautschukzusammensetzungen gemäß den Ansprüchen 1 bis 15 zur Herstellung von Hochspannungsisolator oder schwerbrennbare Kabelummantelung.

22. Verwendung des Siliconkautschuks gemäß Anspruch 20 als Hochspannungsisolator oder schwerbrennbare Kabelummantelung.

## Claims

1. Silicone rubber compositions comprising
(A) 100 parts by weight of at least one diorganopolysiloxane having the general formula (I)
R¹ₐR²_{b}SiO_{(4-a-b)/2} (1)
where
R¹ is an unsubstituted or halogen-substituted monovalent hydrocarbon radical which has from 1 to 20 carbon atoms and is free of aliphatic unsaturated groups,
R² is an unsubstituted or halogen-substituted monovalent hydrocarbon radical which contains at least one aliphatic carbon-carbon multiple bond, with each molecule having on average at least two monovalent hydrocarbon radicals containing aliphatic carbon-carbon multiple bonds of this type bound to silicon atoms, and
a, b are each, independently of one another, a positive number, with the proviso that 1 ≤ a < 3, 0 < b ≤ 1 and 1 < a + b ≤ 3,
(B) from 1 to 100 parts by weight, based on 100 parts by weight of (A), of finely divided silica having a specific surface area, measured by the BET method, of 50 - 300 m²/g,
(C) 50 - 300 parts by weight, based on 100 parts by weight of (A), of at least one aluminum hydroxide powder having a specific surface area, measured by the BET method, of 0.1 - 20 m²/g and an average particle size of 0.05 - 20 µm,
(D) crosslinkers in an amount sufficient to cure the composition, with this crosslinker being selected from the group consisting of
(D1) an organic peroxide, hydroperoxide or a mixture of various organic peroxides or hydroperoxides,
(D2) a combination of an organohydrogenpolysiloxane having the general formula (2)
R_{c}³H_{d}SiO_{(4-c-d)/2} (2)
where
R³ is a substituted or unsubstituted monovalent hydrocarbon radical which is not aliphatically unsaturated and each molecule has on average at least three such hydrogen atoms bound to silicon atoms,
c, d are each, independently of one another, a positive number, with the proviso that 1 ≤ c < 3, 0 < d ≤ 1 and 1 < c + d ≤ 3,
and
a hydrosilylation catalyst comprising at least one transition metal,
(E) 0.01 - 10.0 parts by weight, based on 100 parts by weight of (A), of an inorganic, organic or organosilicon base or organic or organosilicon acid or a compound which liberates an inorganic, organic or organosilicon base or organic or organosilicon acid on heating.

2. Silicone rubber composition according to Claim 1, **characterized in that** the base (E) is selected from the group consisting of alkali metal hydroxides and alkaline earth metal hydroxides, ammonium hydroxide, organic primary, secondary and tertiary amines, ammonia, salts of organic amines and ammonium compounds.

3. Silicone rubber composition according to Claim 2, **characterized in that** the base (E) is ammonium carbonate, ammonium hydrogencarbonate, ammonium acetate or ammonium carbamate.

4. Silicone rubber composition according to Claim 1, **characterized in that** the acid (E) is selected from the group consisting of sulfonic acids, monocarboxylic acids, dicarboxylic acids and hydroxycarboxylic acids.

5. Silicone rubber composition according to Claim 1, **characterized in that** the constituent (E) is selected from the group consisting of aminosilanes, acylaminosilanes, N-triorganosilylcarbamic esters, triorganosilyl N-triorganosilylcarbamates, N-triorganosilylureas, dimethyltrimethylsilylamine, hexamethyldisilazane and divinyltetramethyldisilazane.

6. Silicone rubber composition according to Claim 1, 2, 3 or 5, **characterized in that** the silicone rubber composition contains at least 10 ppm and not more than 1000 ppm of nitrogen.

7. Silicone rubber composition according to any of Claims 1 to 6, **characterized in that** (D) is a combination of an organohydrogenpolysiloxane having the general formula (2):
R_{c}³H_{d}SiO_{(4-c-d)/2} (2),
where
R³ is a substituted or unsubstituted monovalent hydrocarbon radical which is not aliphatically unsaturated and each molecule has on average at least three such hydrogen atoms bound to silicon atoms,
c, d are each, independently of one another, a positive number, with the proviso that 1 ≤ c < 3, 0 < d ≤ 1 and 1 < c + d ≤ 3,
and
a hydrosilylation catalyst comprising at least one transition metal.

8. Silicone rubber composition according to Claim 7, **characterized in that** the hydrosilylation catalyst is selected from the group consisting of compounds of the formula (5) 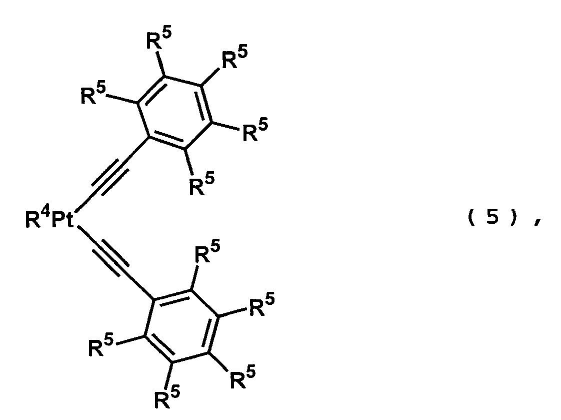 and oligomeric or polymeric compounds which are composed of structural units of the general formula (6) 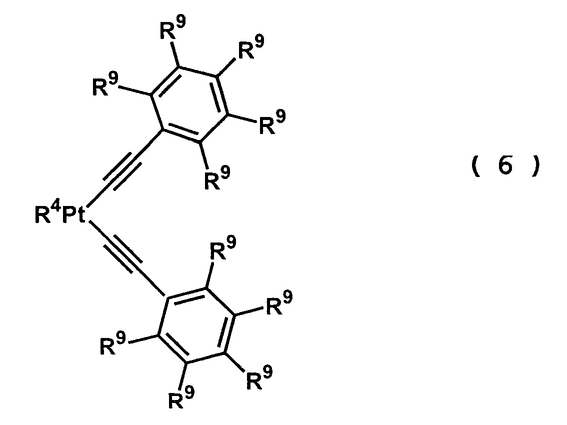 and optionally structural units of the general formula (7)
R¹¹ᵣSiO_{(4-r)/2} (7),
where
**R⁴** is a substituted or unsubstituted diene which is bound to platinum by means of at least one π bond and is an unbranched or branched chain having from 4 to 18 carbon atoms or a ring having from 6 to 28 carbon atoms,
the radicals **R⁵** can be identical or different and are each a hydrogen atom, a halogen atom, -SiR⁶₃, -OR⁸ or a monovalent, substituted or unsubstituted hydrocarbon radical having from 1 to 24 carbon atoms, with the proviso that at least one radical R⁵ in the compounds of the formula (5) is -SiR⁶₃,
the radicals **R⁶** can be identical or different and are each hydrogen, a halogen atom, -OR⁸ or a monovalent, substituted or unsubstituted hydrocarbon radical having from 1 to 24 carbon atoms,
the radicals **R⁸** can be identical or different and are each a hydrogen atom, -SiR⁶₃ or a monovalent, substituted or unsubstituted hydrocarbon radical having from 1 to 20 carbon atoms,
the radicals **R⁹** can be identical or different and are each a hydrogen atom, a halogen atom, -SiR⁶₃, -SiR⁶₍₃₋ₜ₎[R¹⁰SiR¹¹ₛO_{(3-s)/2}]ₜ, -OR⁸ or a monovalent substituted or unsubstituted hydrocarbon radical having from 1 to 24 carbon atoms, with the proviso that at least one radical R⁹ in the formula (6) is -SiR⁶₍₃₋ₜ₎[R¹⁰SiR¹¹ₛO_{(3-s)/2}]ₜ,
the radicals **R¹⁰** can be identical or different and are each oxygen or a divalent, substituted or unsubstituted hydrocarbon radical which has from 1 to 24 carbon atoms and can be bound to the silicon via an oxygen atom,
the radicals R¹¹ can be identical or different and are each hydrogen or an organic radical,
r is 0, 1, 2 or 3,
s is 0, 1, 2 or 3 and
t is 1, 2 or 3.

9. Silicone rubber composition according to Claim 8, **characterized in that** the hydrosilylation catalyst is selected from the group consisting of bis(alkynyl)(1,5-cyclooctadiene)platinum, bis(alkynyl)(bicyclo[2.2.1]hepta-2,5-diene)platinum, bis(alkynyl)(1,5-dimethyl-1,5-cyclooctadiene)platinum and bis(alkynyl)(1,6-dimethyl-1,5-cyclooctadiene)platinum complexes.

10. Silicone rubber composition according to any of Claims 1 to 9, **characterized in that** the silicone rubber composition further comprises an inhibitor.

11. Silicone rubber composition according to any of Claims 1 to 6, **characterized in that** (D) is an organic peroxide, hydroperoxide or a mixture of various organic peroxides or hydroperoxides.

12. Silicone rubber composition according to any of Claims 1 to 11, **characterized in that** the component (B) has been surface-treated with silicon compounds or hydroxy-terminated diorganosiloxane oligomers, with the proportion of these silicon compounds or hydroxy-terminated diorganosiloxane oligomers containing unsaturated groups being at least 10%.

13. Silicone rubber composition according to any of Claims 1 to 12, **characterized in that** the silicone rubber composition further comprises a metal oxide.

14. Silicone rubber composition according to any of Claims 1 to 13, **characterized in that** the silicone rubber composition further comprises a platinum compound or a platinum complex or the reaction product of a platinum compound or a platinum complex with an organosilicon compound which has basic nitrogen bound to the silicon via carbon.

15. Silicone rubber composition according to any of Claims 1 to 14, **characterized in that** the silicone rubber composition further comprises additional fillers.

16. Process for preparing the silicone rubber compositions according to any of Claims 1 to 15, **characterized in that** the constituents are produced by mixing in a mixing apparatus.

17. Process according to Claim 16, **characterized in that** the constituent (E) is mixed with the constituents (A), (B) and (C) and, if appropriate, further optional constituents (F) - (H) in a suitable mixing apparatus and the preproduct is, after having been discharged from the mixing apparatus, finished by addition of constituent (D) on a roll mill.

18. Process according to Claim 16 or 17, **characterized in that** the temperature during the mixing-in of the constituent (E) is above 50°C for at least 10 minutes.

19. Silicone rubber obtainable by crosslinking of the silicone rubber compositions according to any of Claims 1 to 15.

20. Process for preparing a crosslinked silicone rubber according to Claim 19 by crosslinking a silicone rubber composition according to any of Claims 1 to 15.

21. Use of the silicone rubber compositions according to any of Claims 1 to 15 for producing high-voltage insulators or cable sheathing having a low combustibility.

22. Use of the silicone rubber according to Claim 20 as high-voltage insulator or cable sheathing having a low combustibility.

## Revendications

1. Compositions de caoutchouc de silicone, contenant :
(A) 100 parties en poids d'au moins un diorganopolysiloxane de la formule générale (I)
R¹ₐR²_{b}SiO_{(4-a-b)/2} (I)
dans laquelle
R¹ représente un radical hydrocarboné monovalent non substitué ou substitué par de l'halogène et comportant de 1 à 20 atomes de carbone, et qui est dépourvu de groupes aliphatiquement insaturés,
R² représente un radical hydrocarboné monovalent non substitué ou substitué par de l'halogène et contenant au moins une liaison carbone - carbone aliphatique multiple, chaque molécule présentant en moyenne au moins deux restes hydrocarbonés monovalents liés à des atomes de silicium et contenant des liaisons carbone - carbone aliphatiques multiples et
a, b représentent indépendamment l'un de l'autre des nombres positifs, à la condition que 1 ≤ a < 3, 0 < b ≤ 1 et 1 < a + b ≤ 3,
(B) de 1 à 100 parties en poids, par rapport à 100 parties en poids de (A), d'acide silicique hautement dispersé, d'une surface spécifique, mesurée par la méthode BET, de 50 à 300 m²/g,
(C) de 50 à 300 parties en poids, par rapport à 100 parties en poids de (A), d'au moins une poudre d'hydroxyde d'aluminium d'une surface spécifique, mesurée par la méthode BET, de 0,1 à 20 m²/g et d'une taille moyenne de particules de 0,5 à 20 µm,
(D) un agent réticulant en une quantité suffisante pour durcir la composition, cet agent réticulant étant choisi dans le groupe comprenant
(D1) un peroxyde ou un hydroperoxyde organique ou un mélange de différents peroxydes ou hydroperoxydes organiques,
(D2) une combinaison d'un organohydrogénopolysiloxane de la formule générale (2)
R_{c}³H_{d}SiO_{(4-c-d)/2} (2)
dans laquelle
R³ représente un radical hydrocarboné monovalent substitué ou non substitué, qui n'est pas aliphatiquement insaturé, chaque molécule présentant en moyenne au moins trois atomes d'hydrogène liés à des atomes de silicium,
c, d représentant indépendamment l'un de l'autre des nombres positifs, à la condition que 1 ≤ c < 3, 0 < d ≤ 1 et 1 < c + d ≤ 3,
et
un catalyseur d'hydrosilylation contenant au moins un métal de transition,
(E) de 0,01 à 10,0 parties en poids, par rapport à 100 parties en poids de (A), d'une base inorganique, organique ou organosilicique ou d'un acide organique ou organosilicique ou d'un composé libérant, par chauffage, une base inorganique, organique ou organosilicique ou un acide organique ou organosilicique.

2. Composition de caoutchouc de silicone suivant la revendication 1, **caractérisée en ce que** la base (E) est choisie dans le groupe comprenant des hydroxydes de métaux alcalins et alcalino-terreux, de l'hydroxyde d'ammonium, des amines organiques primaires, secondaires et tertiaires, de l'ammoniaque, des sels d'amines organiques et des composés d'ammonium.

3. Composition de caoutchouc de silicone suivant la revendication 2, **caractérisée en ce que** la base (E) est du carbonate d'ammonium, de l'hydrogénocarbonate d'ammonium, de l'acétate d'ammonium ou du carbamate d'ammonium.

4. Composition de caoutchouc de silicone suivant la revendication 1, **caractérisée en ce que** l'acide (E) est choisi dans le groupe comprenant des acides sulfoniques, des acides monocarboxyliques, des acides dicarboxyliques et des acides hydroxycarboxyliques.

5. Composition de caoutchouc de silicone suivant la revendication 1, **caractérisée en ce que** le constituant (E) est choisi dans le groupe comprenant des aminosilanes, des acylaminosilanes, des esters d'acide N-triorganosilylcarbamique des triorganosilylesters d'acide N-triorganosilylcarbamique, des triorganosilylurées, de la diméthyltriméthylsilylamine, de l'hexaméthyldisilazane et du divinyl-tétraméthydisilazane.

6. Composition de caoutchouc de silicone suivant les revendications 1, 2, 3 ou 5, **caractérisée en ce que** la composition de caoutchouc de silicone contient au moins 10 ppm et au maximum 1000 ppm d'azote.

7. Composition de caoutchouc de silicone suivant les revendications 1 à 6, **caractérisée en ce que** (D) est une combinaison d'un organohydrogénopolysiloxane de la formule générale (2) :
R_{c}³H_{d}SiO_{(4-c-d)/2} (2)
dans laquelle
R³ représente un radical hydrocarboné monovalent substitué ou non substitué, qui n'est pas aliphatiquement insaturé, chaque molécule présentant en moyenne au moins trois atomes d'hydrogène liés à des atomes de silicium,
c,d représentant indépendamment l'un de l'autre des nombres positifs, à la condition que 1 ≤ c < 3, 0 < d ≤ 1 et 1 < c + d ≤ 3,
et
un catalyseur d'hydrosilylation contenant au moins un métal de transition.

8. Composition de caoutchouc de silicone suivant la revendication 7, **caractérisée en ce que** le catalyseur d'hydrosilylation est choisi dans le groupe constitués de composés de la formule (5), 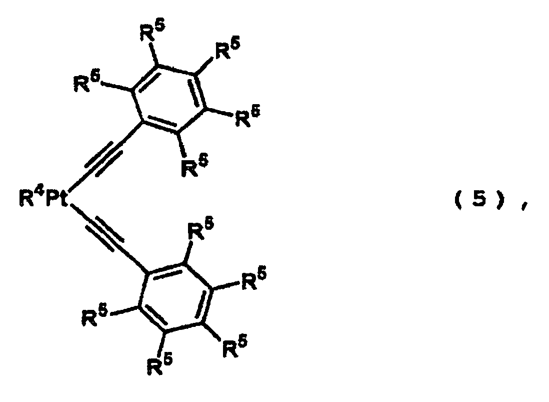 de composés oligomères ou polymères, composés d'unités structurelles de la formule générale (6) 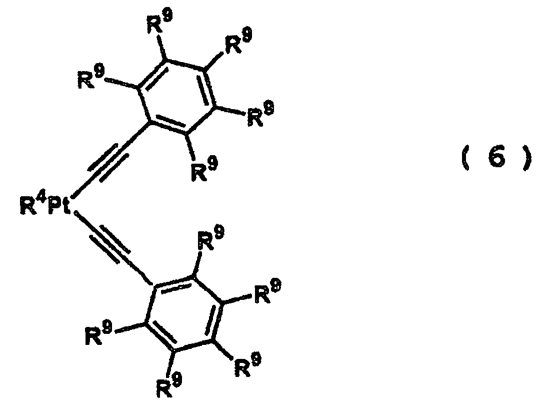 et le cas échéant d'unités structurelles de la formule générale (7)
R¹¹ᵣSiO_{(4-r)/2} (7)
où
R⁴ représente un diène le cas échéant substitué, lié à du platine via au moins une liaison π et représentant une chaîne non ramifiée ou ramifiée comportant de 4 à 18 atomes de carbone, ou un noyau cyclique comportant de 6 à 28 atomes de carbone,
R⁵ peuvent être identiques ou différents et représentent un atome d'hydrogène, un atome d'halogène, -SiR⁶₃, -OR⁸ ou des radicaux hydrocarbonés monovalents, le cas échéant substitués et comportant de 1 à 24 atomes de carbone, à la condition que, dans les composés de la formule (5), au moins un radical R⁵ signifie -SiR⁶₃,
R⁶ peuvent être identiques ou différents et représentent de l'hydrogène, un atome d'halogène, -OR⁸ ou des radicaux hdyrocarbonés monovalents, le cas échéant substitués, et comportant de 1 à 24 atomes de carbone,
R⁸ peuvent être identiques ou différents et représentent un atome d'hydrogène, -SiR⁶₃ ou un radical hydrocarboné monovalent le cas échéant substitué et comportant de 1 à 20 atomes de carbone,
R⁹ peuvent être identiques ou différents et représentent un atome d'hydrogène, un atome d'halogène, -SiR⁶₃, -SiR⁶₍₃₋ₜ₎(R¹⁰SiR¹¹ₛO_{(3-s)/2})ₜ, -OR⁸ ou des radicaux hydrocarbonés monovalents, le cas échéant substitués et comportant de 1 à 24 atomes de carbone, à la condition que, dans la formule (6), au moins un radical R⁹ signifie-SiR⁶₍₃₋ₜ₎ (R¹⁰SiR¹¹ₛO_{(3-s)/2})ₜ,
R¹⁰ peuvent être identiques ou différents et représentent de l'oxygène ou des radicaux hydrocarbonés divalents, le cas échéant substitués et comportant de 1 à 24 atomes de carbone, qui peuvent être liés au silicium via l'atome d'oxygène,
R¹¹ peuvent être identiques ou différents et représentent de l'hydrogène ou un radical organique,
r vaut 0, 1, 2 ou 3,
s vaut 0, 1, 2 ou 3 et
t vaut 1, 2 ou 3.

9. Composition de caoutchouc de silicone suivant la revendication 8, **caractérisée en ce que** le catalyseur d'hydrosilylation est choisi dans le groupe formé par des complexes de bis(alcynyl)(1,5-cyclooctadiène)platine, de bis(alcynyl)(bicyclo[2,2,1]hepta-2,5-diène)platine, de bis(alcynyl)(1,5-diméthyl-1,5-cyclooctadiène)platine et de bis(alcynyl)(1,6-diméthyl-1,5-cyclooctadiène)platine.

10. Composition de caoutchouc de silicone suivant les revendications 1 à 9, **caractérisée en ce que** la composition de caoutchouc de silicone contient en outre un inhibiteur.

11. Composition de caoutchouc de silicone suivant les revendications 1 à 6, **caractérisée en ce que** (D) est un peroxyde ou hydroperoxyde organique ou un mélange de différents peroxydes ou hydroperoxydes organiques.

12. Composition de caoutchouc de silicone suivant l'une quelconque des revendications 1 à 11, **caractérisée en ce que** le composant (B) est traité en surface par des composés de silicium ou des diorganosiloxanes oligomères à terminaison hydroxy, la fraction de ces composés de silicium ou de ces diorganosiloxanes oligomères à terminaison hydroxy, contenant des groupes insaturés, est d'au moins 10%.

13. Composition de caoutchouc de silicone suivant l'une quelconque des revendications 1 à 12, **caractérisée en ce que** la composition de caoutchouc de silicone contient en outre un oxyde métallique.

14. Composition de caoutchouc de silicone suivant l'une quelconque des revendications 1 à 13, **caractérisée en ce que** la composition de caoutchouc de silicone contient en outre un composé de platine ou un complexe de platine ou le produit de réaction d'un composé de platine ou d'un complexe de platine avec un composé organosilicique, qui présente un azote basique lié au silicium via du carbone.

15. Composition de caoutchouc de silicone suivant l'une quelconque des revendications 1 à 14, **caractérisée en ce que** la composition de caoutchouc de silicone contient d'autres charges.

16. Procédé de préparation des compositions de caoutchouc de silicone suivant l'une quelconque des revendications 1 à 15, **caractérisé en ce que** les constituants sont préparés par mélange dans un appareil de mélange.

17. Procédé suivant la revendication 16, **caractérisée en ce que** le constituant (E) est mélangé aux constituants (A), (B) et (C) et le cas échéant d'autres constituants optionnels (F) - (H) dans un appareil de mélange approprié, et qu'après la décharge du demi-produit de l'appareil de mélange, il est achevé avec le constituant (D) sur un malaxeur.

18. Procédé suivant la revendication 16 ou 17, **caractérisé en ce que** la température pendant l'incorporation du constituant (E) est de plus de 50°C pendant au moins 10 minutes.

19. Caoutchouc de silicone que l'on peut obtenir par réticulation des compositions de caoutchouc de silicone suivant les revendications 1 à 15.

20. Procédé de préparation d'un caoutchouc de silicone réticulé suivant la revendication 19 par réticulation d'une composition de caoutchouc de silicone suivant les revendications 1 à 15.

21. Utilisation des compositions de caoutchouc de silicone suivant les revendications 1 à 15 pour la préparation d'isolateurs haute tension ou de gaines de câbles peu inflammables.

22. Utilisation du caoutchouc de silicone suivant la revendication 20 en tant qu'isolateur haute tension ou gaine de câbles peu inflammable.
